(19)

Europäisches
Patentamt
European
Patent Office
Office européen
des brevets

(11)   **EP 1 750 452 B1**

(12)   **EUROPEAN PATENT SPECIFICATION**

(45) Date of publication and mention
of the grant of the patent:
**08.08.2012 Bulletin 2012/32**

(51) Int Cl.:
***H04N 7/26*** *(2006.01)*   ***H04N 7/34*** *(2006.01)*

(21) Application number: **06124547.8**

(22) Date of filing: **12.06.2003**

(54) **Apparatus for intra coding video data**

Vorrichtung zur intra Kodierung von Videodaten

Dispositif pour le codage intra de données vidéo

(84) Designated Contracting States:
**AT BE BG CH CY CZ DE DK EE ES FI FR GB GR
HU IE IT LI LU MC NL PT RO SE SI SK TR**

(30) Priority: **08.07.2002 US 394524 P
27.09.2002 US 414120 P
01.10.2002 US 415447 P**

(43) Date of publication of application:
**07.02.2007 Bulletin 2007/06**

(62) Document number(s) of the earlier application(s) in
accordance with Art. 76 EPC:
**03762992.0 / 1 649 697**

(73) Proprietor: **RealNetworks, Inc.
Seattle, WA 98121 (US)**

(72) Inventor: **Conklin, Gregory J.
Seattle, WA 97101 (US)**

(74) Representative: **Brophy, David Timothy
FRKelly
27 Clyde Road
Ballsbridge
Dublin 4 (IE)**

(56) References cited:
- **"WORKING DRAFT NUMBER 2, REVISION 0 (WD-
2)" DOCUMENT JVT-B118, XX, XX, 3 December
2001 (2001-12-03), pages 1,3-100, XP001086632**
- **BJONTEGAARD G (EDITOR): "H.26L TEST
MODEL LONG TERM NUMBER 8 (TML-8)
DRAFT0" ITU STUDY GROUP 16 - VIDEO CODING
EXPERTS GROUP, XX, XX, 2 April 2001
(2001-04-02), pages 1-2,16-19, XP002250455**

## Description

Related Application

This application relates to application of U.S. application number, 09/732,522, filed December 6, 2000, entitled "System and Method for Intracoding Video Data".

Background of the Invention

Field of the Invention

The invention pertains to a video system that compresses video data for transmission or storage and decompresses the video data for display. More particularly, the invention pertains to a video system and a method for intracoding video data.

Description of the Related Art

Video systems transmit, process and store large quantities of video data. To create a video presentation, such as a video movie, a rendering video system displays the video data as a plurality of digital images, also referred to as "frames," thereby simulating movement. In order to achieve a video presentation with an acceptable video quality, or to enable transmission and storage at all, a conventional video system modifies the video data prior to transmission or storage. For instance, the video system compresses and encodes the video data to reduce the bit rate for storage and transmission.

In a conventional video system a video encoder is used to compress and encode the video data and a video decoder is used to decompress and to decode the video data. The video encoder outputs video data that has a reduced bit rate and a reduced redundancy. That is, the technique of video compression removes spatial redundancy within a video frame or temporal redundancy between consecutive video frames.

The video encoder and video decoder may be configured to apply one of two types of coding to compress the video stream, namely intracoding and intercoding. These two types of coding are based on the statistical properties of the video frames. When the video frames are coded using intracoding, the compression is based on information contained in a single frame (the frame that is compressed) by using the spatial redundancy within the frame. Intracoding, thus, does not depend on any other frames. In contrast, intercoding uses at least one other frame as a reference and codes a difference between the frame to be compressed and the reference frame. Intercoding is thus based on a temporal redundancy between consecutive frames in the video data.

The field of video compression is subject to international standards, e. g., various International Telecommunications Union (ITU) standards that define uniform requirements for video coding and decoding. Typically, these standards evolve based on contributions from the industry. In addition, manufacturers of video coders and decoders also modify or build upon the international standards and implement additional proprietary techniques for video compression.

Industry standard modes for intracoding are noted in the literature, for example, "Work Draft Number 2. Revision 0 (WD-2) Document JVT-B118 (3 December, 2001), contains a description of a reference coding method to be used for development of a video compression method call JVT coding as ITU-T recommendation (H.26L) and ISO/IEC JTC1 Standard (MPEG-4, Part 10). Bjontegaard, G. (editor): "H.26L Test Model Long Term Number 8 (TML-8) Draft 0" ITU Study Group 16- Video Coding Experts Group (2 April 2001) similarly describes some industry standard modes.

Despite the existence of the international standards and the proprietary techniques, there is still a need for improved techniques for video compression. For example, as the quality of a displayed video movie depends directly from the technique used for video compression, any improvement of the video compression technique makes the video movie more pleasing for the viewer.

Statements of Invention

According to the invention there is provided an apparatus as claimed in claim 1.

Brief Description of the Drawings

These and other aspects, advantages, and novel features of the invention will become apparent upon reading the following detailed description and upon reference to the accompanying drawings.

Figure 1 is a high-level block diagram of a system for video applications having an encoding side and a decoding side.

**Figure 2** is a high-level illustration of a frame and its division in macroblocks and subblocks.

**Figure 3** is a subblock illustrating the directions according to which the subblock can be encoded, wherein each direction represents one of eight prediction modes in accordance with the present invention.

**Figure 4** is a flow chart in accordance with an embodiment of the present invention that selects a prediction mode.

**Figure 5** is an illustration of three neighboring subblocks, wherein two subblocks are used to encode the third subblock.

**Figure 6** illustrates a video device having an encoder and a decoder incorporated with the encoding/decoding teachings of the present invention, in accordance with one embodiment.

**Figure 7** illustrates an article of manufacture with a recordable medium having a software implementation of the encoder/decoder of the present invention, designed for use to program a device to equip the device with the encoding/decoding capability of the present invention, in accordance with one embodiment.

**Figure 8** illustrates a system having a video sender device and a video receiver device incorporated with the encoding/decoding teachings of the present invention, in accordance with one embodiment.

**Figures 9a-9c** illustrate the surrounding pixels used for predicting the pixel values of a 8x8, a 8x4 and a 4x8 subblock respectively, in accordance to three alternate embodiments.

Detailed Description of the Preferred Embodiment

In the following description, reference is made to the accompanying drawings, which form a part hereof, and which show, by way of illustration, specific embodiments in which the invention may be practiced. It is to be understood that other embodiments may be utilized and structural changes may be made without departing from the scope of the present invention. Where possible, the same reference numbers will be used throughout the drawings to refer to the same or like components. Numerous specific details are set forth in order to provide a thorough understanding of the present invention. However, it will be obvious to one skilled in the art that the present invention may be practiced without the specific details or with certain alternative equivalent devices and methods to those described herein. In other instances, well-known methods, procedures, components, and devices have not been described in detail so as not to unnecessarily obscure aspects of the present invention.

Various operations will be described as multiple discrete steps in turn, in a manner that is helpful in understanding the present invention, however, the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may. The terms "comprising", "having" and "including" are synonymous, unless the context dictates otherwise.

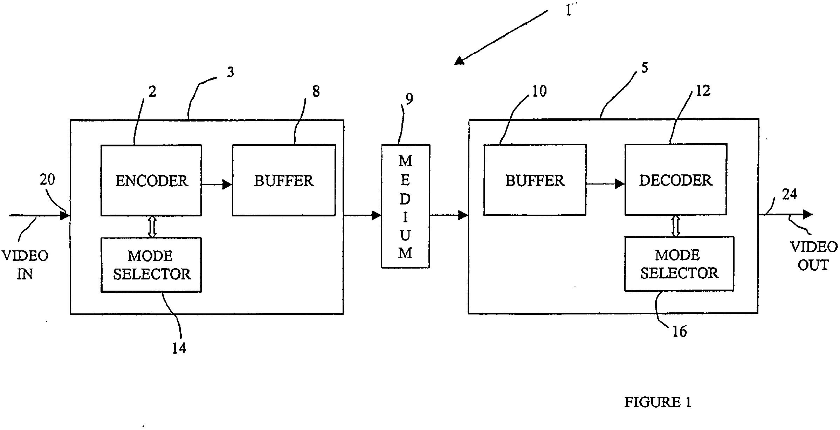

**Figure 1** is a high-level block diagram of a video compression and decompression system **1** (hereinafter "video system **1**") having an encoder apparatus **3** and a decoder apparatus **5** that is coupled to the encoder apparatus **3** through a medium **9**. The encoder apparatus **3** includes a video encoder **2,** a mode selector **14** and a buffer **8**. The decoder apparatus **5** includes a buffer **10,** a video decoder **12** a nd a mode selector **16.** The encoder apparatus **3** receives a video sequence **20** (VIDEO IN) and encodes the video sequence **20** to generate an encoded and thus compressed representation in one of a number of possible formats. The format may be in an interleaved format tailored for "live" streaming of the encoded representation. The format may also be in a single file format in which each of the encoded representation is stored in a contiguous block within one file.

The video sequence **20** input to the encoder apparatus **3** may be either a live signal, e.g., provided by a video camera, or a prerecorded sequence in a predetermined format. The video sequence **20** includes frames of a digital video, an audio segment consisting of digital audio, combinations of video, graphics, text, and/or audio (multimedia applications), or analog forms of the aforementioned. If necessary, conversions can be applied to various types of input signals such as analog video, or previously compressed and encoded video to produce an appropriate input to the encoder apparatus **3**. In one embodiment, the encoder apparatus 3 may accept video in RGB or YUV formats. The encoder apparatus **3**, however, may be adapted to accept any format of input as long as an appropriate conversion mechanism is supplied. Conversion mechanisms for converting a signal in one format to a signal in another format are well known in the art.

The medium **9** may be a storage device or a transmission medium. In one embodiment, the video system **1** may be implemented on a computer. The encoder apparatus **3** sends an encoded video stream (representation) to the medium **9** that is implemented as a storage device. The storage device may be a video server, a hard disk drive, a CD rewriteable drive, a read/write DVD drive, or any other device capable of storing a nd allowing the retrieval of encoded video data. The storage device is connected to the decoder apparatus **5**, which can selectively read from the storage device and decode the encoded video sequence. As the decoder apparatus **5** decodes a selected one of the encoded video sequence, it generates a reproduction of the video sequence **20**, for example, for display on a computer monitor or screen.

In another embodiment, the medium **9** provides a connection to another computer, which may be a remote computer that receives the encoded video sequence. The medium **9** may be a network connection such as a LAN, a WAN, the Internet, or the like. The decoder apparatus **5** within the remote computer decodes the encoded representations contained therein and may generate a reproduction of the video sequence **20** on a screen or a monitor of the remote computer.

Aspects of the video system **1** illustrated in **Figure 1** and described above can be combined and supplemented to achieve other embodiments. Numerous other implementations are consistent with the scope of this invention. Such other implementations need not be restricted to video, but may include audio or other forms of media as well.

Pre-existing video encoding techniques typically break up a frame (picture) into smaller blocks of pixels called macroblocks. Each macroblock can consist of a matrix of pixels, typically a 16x16 matrix, defining the unit of information at which encoding is performed. The matrix of pixels is therefore referred to as a 16x16 macroblock. These video encoding techniques usually break each 16x16 macroblock further up into smaller matrices of pixels, e.g. 8x8 matrices of pixels or 4x4 matrices of pixels. Such matrices are hereinafter referred to as subblocks.

In one embodiment of the present invention, a 16x16 macroblock is divided into 16 4x4 subblocks. In other embodiments, a 16x16 marcoblock is divided into 8x8 subblocks, 8x4 subblocks, or 4x8 subblocks. Those skilled in the art will appreciate that the present invention is equally applicable or easily adaptable to systems that use other sublocks, or only 16x16 marcoblocks without breaking it up into subblocks.

Further, the pre-existing encoding techniques provide for motion compensation and motion estimation using motion vectors. The motion vectors describe the direction, expressed through an x-component and a y-component, and the amount of motion of the 16x16 macroblocks, or their respective subblocks, and are transmitted to the decoder as part of the bit stream. Motion vectors are used for bidirectionally encoded pictures (B-pictures) and predicted pictures (P pictures) as known in the art.

The video encoder **2** performs a discrete cosine transform (DCT) to encode and compress the video sequence **20**. Briefly, the video encoder **2** converts the video sequence **20** from the spacial, temporal domain into the frequency domain. The output of the video encoder **2** is a set of signal amplitudes, called "DCT coefficients." A quantizer receives the DCT coefficients and assigns each of a range (or step size) of DCT coefficient values a single value, such as a small integer, during encoding. Quantization allows data to be represented more compactly, but results in the loss of some data. Quantization on a finer scale results in a less compact representation (higher bit-rate), but also involves the loss of less data. Quantization on a more coarse scale results in a more compact representation (lower bit-rate), but also involves more loss of data. The mode selector **14** communicates with the video encoder **2** and monitors and controls encoding of the video sequence **20**. The mode selector **14** determines in accordance with the present invention prediction modes according to which the video encoder **2** encodes the video sequence **20**. The mode selector **14** may be a processor or one or more software modules that are configured to operate in accordance with a method of the present invention. **Figure 1** shows the mode selector **14** for illustrative purposes as an element separate from the video encoder **2**. Those skilled in the art will appreciate that the functionality of the mode selector **14** may be combined with the functionality of the video encoder **2**.

The buffer **8** of the encoder apparatus **3** receives the encoded and compressed video sequence (hereinafter "encoded video sequence") from the video encoder **2** and adjusts the bit rate of the encoded video sequence before it is sent to the medium **9**. Buffering may be required because individual video images may contain varying amounts of information, resulting in varying coding efficiencies from image to image. As the buffer **8** has a limited size, a feedback loop to the quantizer may be used to avoid overflow or underflow of the buffer **8**. The bit-rate of the representation is the rate at which the representation data must be processed in order to present the representation in real time.

The decoder apparatus **5** performs the inverse function of the encoder apparatus **3**. The buffer **10** serves also to adjust the bit rate of the incoming encoded video sequence. The video decoder **12** decodes and decompresses in combination with the mode selector **16** the incoming video sequence reconstructing the video sequence. The mode selector **16** determines the prediction modes according to which the video encoder **2** encoded the incoming video sequence. The decoder apparatus **5** outputs a decoded and decompressed video sequence **24** illustrated as "VIDEO OUT" (hereinafter "decoded video sequence **24**").

The video decoder **12** receives a bit stream that represents the encoded video sequence from the buffer **10** (**Figure 1**). In one embodiment, the video decoder is a conventional video decoder, e.g., a MPEG-x decoder, that includes a decoder controller, a VLC decoder (Variable Length Coding, VLC) and a reconstruction module. The operation and function of these components are known to those skilled in the art. These components are known to those skilled in the art and described in generally available MPEG documents and publications.

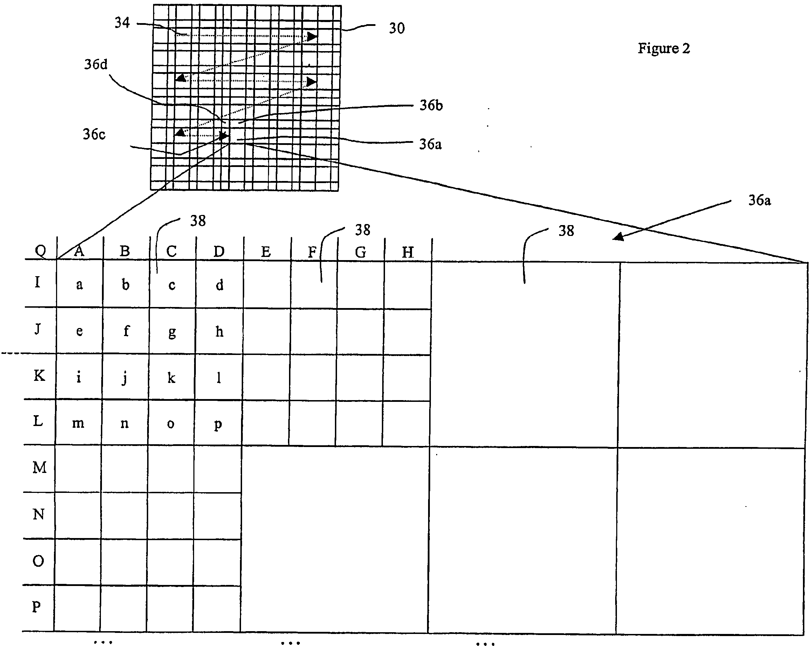

**Figure 2** is a diagram illustrating a video frame **30** that is part of the video sequence **20**. As described above, known video encoding techniques typically break up a video frame **30** into macroblocks **36, 36a, 36b, 36c, 36d**. For example, the video frame **30** is divided into a matrix of **16x16** macroblocks **36, 36a, 36b, 36c, 36d**. The video system **1** encodes the macroblocks **36, 36a, 36b, 36c, 36d** line by line, from top to bottom and from left to right, as indicated through a dashed line **34** that illustrates the sequence of, e.g., intra encoding. In the illustrated embodiment, the dashed line **34** ends at the macroblock 36a, which is the next macroblock to be encoded. All prior macroblocks **36, 36b, 36c, 36d** have already been encoded.

The macroblock **36a,** as a representative for all macroblocks **36, 36a, 36b, 36c, 36d,** is shown in greater detail below the video frame **30**. The video encoding technique of the video system **1** breaks each macroblock **36, 36a, 36b, 36c, 36d** further up into a matrix of pixels **38**, hereinafter referred to as a subblock 38.

In one embodiment, the subblock **38** is a **4x4** matrix of pixels, wherein the 16 pixels are labeled as a, b, c, ..., p (in a "row first" manner). Bordering pixels of an adjacent subblock of a neighboring macroblock **36b**, which is located directly above subblock **38** of macroblock **36a**, are labeled as A, B, C, D. Further, bordering pixels of a subblock of macroblock **36b** located above and to the right of the subblock **38** are labeled as E, F, G, H. Likewise, bordering pixels of an adjacent subblock of a neighboring macroblock **36c**, which is located directly to the left of subblock **38** of macroblock **36a**, are labeled as I, J, K, L. Bordering pixels of a subblock of marcoblock **36c** located to the left and below of subblock **38** are labeled as M, N, O, P. A bordering pixel of a subblock of a macroblock **36d**, which is located above and to the left of subblock **38** of the macroblock **36a**, is labeled as Q.

The video system **1** of the present invention codes each macroblock **36** as an intra macroblock. Intra macroblocks are transform encoded without motion compensated prediction. Thus, intra macroblocks d o n ot reference decoded data from either previous or subsequent frames. An I-frame is a frame consisting completely of intra macroblocks. Thus, I-frames are encoded with no reference to previous or subsequent frames. I-frames are also known as "Intra-frames."

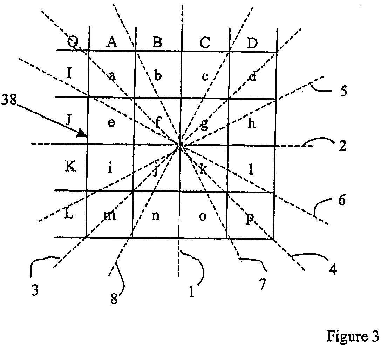

**Figure 3** is a subblock **38** illustrating possible directions according to which the subblock **38** may be encoded. In accordance with the present invention, the subblocks of a macroblock **36, 36a, 36b, 36c, 36d** can be intra coded in one of nine modes (Modes 0, Mode **1**, ..., Mode 9) as listed hereinafter. That is, a particular subblock **38** may be predicted from a subblock above the current subblock that is currently decoded ("vertical prediction"), from the subblock to the left of the current subblock ("horizontal prediction"), or from both the left and the above subblocks ("diagonal prediction"). The Modes 1-8 predict the subblock in a predetermined direction and the Mode 0 uses a uniform average without prediction in a predetermined direction. In **Figure 3**, each direction represents one of the eight prediction modes in accordance with the present invention.

It is noted that standard Modes 0-8 embodiments as defined page 8 line 29 to page 23 line 11 do not fall under the present invention, their being known in the art.

Mode 0:

In this mode, each pixel a - p is predicted by the following equation:

$$a,b,c,d,...,p = \frac{A+B+C+D+I+J+K+L+4}{8}.$$

It is contemplated that in this mode as well as in the following modes, a "division" means to round the result down toward "minus infinity" ($-\infty$). For instance, in mode 0, the term "+4" ensures that the division results in a rounding to the nearest integer. This applies also the other modes.

If four of the pixels a - p are outside the current picture (frame) that is currently encoded, the average of the remaining four pixels is used for prediction. If all eight pixels are outside the picture, the prediction for all pixels in this subblock is 128. A subblock may therefore always be predicted in mode 0.

Mode 1:

If the pixels A, B, C, D are inside the current picture, the pixels a - p are predicted in vertical direction as shown in **Figure 3**. That is, the pixels a - p are predicted as follows:

| a, e, i, m | = | A |
|---|---|---|
| b, f, j, n | = | B |
| c, g, k, o | = | C |
| d, h, l, p | = | D |

Mode 2:

If the pixels I, J, K, L are inside the current picture, the pixels a - p are predicted in horizontal direction. That is, the pixels a - p are predicted as follows:

| a, b, c, d | = | I |
|---|---|---|
| e, f, g, h | = | J |
| i, j, k, l | = | K |
| m, n, o, p | = | L |

Mode 3:

This mode is used if all pixels a - p are inside the current picture. This corresponds to a prediction in a diagonal direction as shown in Figure 3. The pixels a - p are predicted as follows:

| m | = | (J+2K+L+2)/4 |
|---|---|---|
| i, n | = | (I+2J+K+2)/4 |
| e, j, o | = | (Q+2I+J+2)/4 |
| a, f, k, p | = | (I+2Q+A+2)/4 |
| b, g, l | = | (Q+2A+B+2)/4 |
| c, h | = | (A+2B+C+2)/4 |
| d | = | (B+2C+D+2)/4 |

Mode 4:

This mode is used if all pixels a - p are inside the current picture. This is also a diagonal prediction.

| a | = | (A+2B+C+I+2J+K+4)/8 |
|---|---|---|
| b, e | = | (B+2C+D+J+2K+L+4)/8 |
| c, f, i | = | (C+2D+E+K+2L+M+4)/8 |
| d, g, j, m | = | (D+2E+F+L+2M+N+4)/8 |
| h, k, n | = | (E+2F+G+M+2N+O+4)/8 |
| l, o | = | (F+2G+H+N+2O+P+4)/8 |
| p | = | (G+H+O+P+2)/4 |

Mode 5:

This mode is used if all pixels a - p are inside the current picture. This is also a diagonal prediction.

| a, j | = | (Q+A+1)/2 |
|---|---|---|
| b, k | = | (A+B+1)/2 |
| c, l | = | (B+C+1)/2 |
| d | = | (C+D+1)/2 |
| e, n | = | (I+2Q+A+2)/4 |
| f, o | = | (Q+2A+B+2)/4 |

(continued)

| | | |
|---|---|---|
| g, p | = | (A+2B+C+2)/4 |
| h | = | (B+2C+D+2)/4 |
| i | = | (Q+2I+J+2)/4 |
| m | = | (I+2J+K+2)/4 |

Mode 6:

This mode is used if all pixels a - p are inside the current picture. This is a diagonal prediction.

| | | |
|---|---|---|
| a | = | (2A+2B+J+2K+L+4)/8 |
| b, i | = | (B+C+1)/2 |
| c, j | = | (C+D+1)/2 |
| d, k | = | (D+E+1)/2 |
| l | = | (E+F+1)/2 |
| e | = | (A+2B+C+K+2L+M+4)/8 |
| f, m | = | (B+2C+D+2)/4 |
| g, n | = | (C+2D+E+2)/4 |
| h, o | = | (D+2E+F+2)/4 |
| p | = | (E+2F+G+2)/4 |

Mode 7:

This mode is used if all pixels a - p are inside the current picture. This is a diagonal prediction.

| | | |
|---|---|---|
| a | = | (B+2C+D+2I+2J+4)/8 |
| b | = | (C+2D+E+I+2J+K+4)/8 |
| c, e | = | (D+2E+F+2J+2K+4)/8 |
| d, f | = | (E+2F+G+J+2K+L+4)/8 |
| g, i | = | (F+2G+H+2K+2L+4)/8 |
| h, j | = | (G+3H+K+2L+M+4)/8 |
| k, m | = | (G+H+L+M+2)/4 |
| l, n | = | (L+2M+N+2)/4 |
| o | = | (M+N+1)/2 |
| p | = | (M+2N+O+2)/2 |

Mode 8:

This mode is used if all pixels a - p are inside the current picture. This is a diagonal prediction.

| | | |
|---|---|---|
| a, g | = | (Q+I+1)/2 |
| b, h | = | (I+2Q+A+2)/4 |
| c | = | (Q+2A+B+2)/4 |
| d | = | (A+2B+C+2)/4 |

(continued)

| e, k | = | (I+J+1)/2 |
|---|---|---|
| f, l | = | (Q+2I+J+2)/4 |
| i, o | = | (J+K+1)/2 |
| j, p | = | (I+2J+K+2)/4 |
| m | = | (K+L+1)/2 |
| n | = | (J+2K+L+2)/2 |

In one embodiment of the present invention, a mode selection algorithm determines a criteria to select one of the nine modes. The subblock 38 is then encoded in accordance with the selected mode. The mode selection algorithm i s described in detail below.

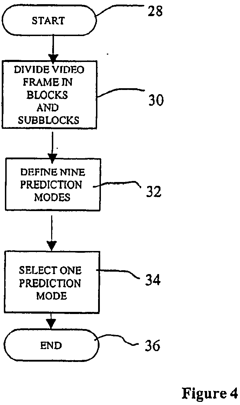

**Figure 4** is a flow chart of a procedure illustrating the method in accordance with the present invention that codes video data including a stream of video frames and that selects one of the prediction modes Modes 0-8. In one embodiment, the method codes a luminance portion (Y) of a video frame.

In a step **28**, e.g., when a user activates the video system 1, the procedure initializes the video system **1**. The initialization procedure includes, for example, determining whether the encoder apparatus **3** is operating and properly connected to receive the stream of video frames.

In a step **30**, the procedure receives the stream of video frames and divides each video frame into a matrix of a plurality of subblocks, w herein each s ubblock includes a plurality of pixels. The matrix of a plurality of subblocks may include 4x4 subblocks 38 that are part of a macroblock as described above.

In a step **32**, the procedure defines the nine prediction modes Mode 0-8, wherein each prediction mode determines a mode according to which a present subblock is to be coded. For example, the procedure may execute a subroutine to calculate and define the modes Mode 0-8.

In a step **34**, the procedure selects one of the nine prediction modes Mode 0-8 to encode the present subblock **38**. In one embodiment, the procedure calculates for each m ode an error value, determines which mode provides a minimum error value and selects that mode for encoding the present subblock **38**.

Once the procedure has selected the "best" prediction mode to encode the pixels of the present subblock **38**, the procedure encodes the minimum error value and transmits the encoded minimum error value within a compressed bitstream to the decoder. The minimum error value represents a difference between the predicted pixels of the present subblock and the original pixels of the subblock. The difference may be encoded using a DCT, coefficient quantization and variable length coding as known in the art. The decoder uses the predicted pixels and the difference to the original pixels to accurately reconstruct the video frame. The procedure ends at a step **36**.

The procedure provides that each of the 4x4 subblocks **38** is coded in accordance with one of the nine prediction modes Mode 0-8. As this may require a considerable number of bits if coded directly, the video system 1 in accordance with the present invention may apply a more efficient way of coding the mode information. A prediction mode of a subblock is correlated with the prediction modes of adjacent subblocks.

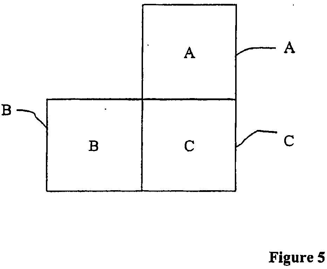

**Figure 5** illustrates this through three exemplary subblocks A, B, C. The subblock C is the subblock that is to be encoded (predicted) with the help of the subblocks A, B whose prediction modes are known. The subblock A is located above the subblock C and the subblock B is located left of the subblock C. In this case, an ordering of the most probable, next most probable etc. prediction mode for the subblock C is given. An example of such an ordering table is listed hereinafter. The table is divided into ten groups (Group 1-Group 10). In each group, the respective prediction mode for the subblock A is constant (e.g., Mode 0 of the subblock A is constant in Group 2), and the prediction mode for the subblock B varies. That is, the (constant) prediction mode for the subblock A within a group may be combined with one of the nine prediction modes for the subblock B within that group.

F or each combination of the prediction modes of the subblocks A and B, a sequence of nine numbers is given, one number for each of the nine Modes 0-9. For example in Group 3, if the prediction modes for the subblock A and the subblock B are both Mode 1, a string "1 6 2 5 3 0 4 8 7" indicates that the Mode 1, i.e., the first number in the string, is the most probable mode for the subblock C. The Mode 6, i.e., the second number in the string, is the next most probable mode. In the exemplary string, the Mode 7 is the least probable since the number 7 is the last number in the string. The string will be part of the stream of bits that represents the encoded video sequence.

The stream of bits therefore includes information (Prob0 = 1 (see Table 1)) indicating the mode used for the subblock C. For example, the information may indicate that the next most probable intra prediction mode is Mode 6. Note that a "-" in the table indicates that this instance cannot occur. The term "outside" used in the Table 1 indicates "outside the frame." If the subblock A or B is within the frame, but is not INTRA coded (e.g., in a P frame, the subblock C could be INTRA coded but either the subblock A or the subblock B may not be INTRA coded), there is no prediction mode. The procedure of the present invention assumes the Mode 0 for such subblocks.

Table 1.

| B | A = outside | |
|---|---|---|
| outside | 0--------- | |
| mode 0 | 0 2------- | |
| mode 1 | ---------- | |
| mode 2 | 2 0------- | |
| mode 3 | ---------- | GROUP 1 |
| mode 4 | ---------- | |
| mode 5 | ---------- | |
| mode 6 | ---------- | |
| mode 7 | ---------- | |
| mode 8 | ---------- | |

| B | A = mode 0 | |
|---|---|---|
| outside | 0 1 - - - - - - - | |
| mode 0 | 0 2 1 6 4 8 5 7 3 | |
| mode 1 | 1 0 2 6 5 4 3 8 7 | |
| mode 2 | 2 8 0 1 7 4 3 6 5 | |
| mode 3 | 2 0 1 3 8 5 4 7 6 | GROUP 2 |
| mode 4 | 2 0 1 4 6 7 8 3 5 | |
| mode 5 | 0 1 5 2 6 3 8 4 7 | |
| mode 6 | 0 1 6 2 4 7 5 8 3 | |
| mode 7 | 2 7 0 1 4 8 6 3 5 | |
| mode 8 | 2 8 0 1 7 3 4 5 6 | |

| B | A = mode 1 | |
|---|---|---|
| outside | 1 0 - - - - - - - | |
| mode 0 | 1 2 5 6 3 0 4 8 7 | |
| mode 1 | 1 6 2 5 3 0 4 8 7 | |
| mode 2 | 2 1 7 6 8 3 5 0 4 | |
| mode 3 | 1 2 5 3 6 8 4 7 0 | GROUP 3 |
| mode 4 | 1 6 2 0 4 5 8 7 3 | |
| mode 5 | 1 5 2 6 3 8 4 0 7 | |
| mode 6 | 1 6 0 2 4 5 7 3 8 | |
| mode 7 | 2 1 7 6 0 8 5 4 3 | |
| mode 8 | 1 2 7 8 3 4 5 6 0 | |

(continued)

| B | A = mode 1 | |
|---|---|---|
| | | |
| B | A = mode 2 | |
| outside | -------- | |
| mode 0 | 0 2 1 8 7 6 5 4 3 | |
| mode 1 | 1 2 0 6 5 7 4 8 3 | |
| mode 2 | 2 8 7 1 0 6 4 3 5 | |
| mode 3 | 2 0 8 1 3 7 5 4 6 | GROUP 4 |
| mode 4 | 2 0 4 1 7 8 6 3 5 | |
| mode 5 | 2 0 1 5 8 4 6 7 3 | |
| mode 6 | 2 0 6 1 4 7 8 5 3 | |
| mode 7 | 2 7 8 1 0 5 4 6 3 | |
| mode 8 | 2 8 7 1 0 4 3 6 5 | |
| | | |
| B | A = mode 3 | |
| outside | -------- | |
| mode 0 | 0 2 1 3 5 8 6 4 7 | |
| mode 1 | 1 0 2 5 3 6 4 8 7 | |
| mode 2 | 2 8 1 0 3 5 7 6 4 | |
| mode 3 | 3 2 5 8 1 4 6 7 0 | GROUP 5 |
| mode 4 | 4 2 0 6 1 5 8 3 7 | |
| mode 5 | 5 3 1 2 8 6 4 0 7 | |
| mode 6 | 1 6 0 2 4 5 8 3 7 | |
| mode 7 | 2 7 0 1 5 4 8 6 3 | |
| mode 8 | 2 8 3 5 1 0 7 6 4 | |
| | | |
| B | A = mode 4 | |
| outside | --------- | |
| mode 0 | 2 0 6 1 4 7 5 8 3 | |
| mode 1 | 1 6 2 0 4 5 3 7 8 | |
| mode 2 | 2 8 7 6 4 0 1 5 3 | |
| mode 3 | 4 2 1 0 6 8 3 5 7 | GROUP 6 |
| mode 4 | 4 2 6 0 1 5 7 8 3 | |
| mode 5 | 1 2 5 0 6 3 4 7 8 | |
| mode 6 | 6 4 0 1 2 7 5 3 8 | |
| mode 7 | 2 7 4 6 0 1 8 5 3 | |

(continued)

| B | A = mode 4 | |
|---|---|---|
| mode 8 | 2 8 7 4 6 1 3 5 0 | |
| | | |
| B | A = mode 5 | |
| outside | --------- | |
| mode 0 | 5 1 2 3 6 8 0 4 7 | |
| mode 1 | 1 5 6 3 2 0 4 8 7 | |
| mode 2 | 2 1 5 3 6 8 7 4 0 | |
| mode 3 | 5 3 1 2 6 8 4 7 0 | GROUP 7 |
| mode 4 | 1 6 2 4 5 8 0 3 7 | |
| mode 5 | 5 1 3 6 2 0 8 4 7 | |
| mode 6 | 1 6 5 2 0 4 3 7 8 | |
| mode 7 | 2 7 1 6 5 0 8 3 4 | |
| mode 8 | 2 5 1 3 6 8 4 0 7 | |
| | | |
| B | A = mode 6 | |
| outside | --------- | |
| mode 0 | 1 6 2 0 5 4 3 7 8 | |
| mode 1 | 1 6 5 4 2 3 0 7 8 | |
| mode 2 | 2 1 6 7 4 8 5 3 0 | |
| mode 3 | 2 1 6 5 8 4 3 0 7 | GROUP 8 |
| mode 4 | 6 4 1 2 0 5 7 8 3 | |
| mode 5 | 1 6 5 2 3 0 4 8 7 | |
| mode 6 | 6 1 4 0 2 7 5 3 8 | |
| mode 7 | 2 7 4 6 1 5 0 8 3 | |
| mode 8 | 2 1 6 8 4 7 3 5 0 | |
| | | |
| B | A = mode 7 | |
| outside | --------- | |
| mode 0 | 2 0 4 7 6 1 8 5 3 | |
| mode 1 | 6 1 2 0 4 7 5 8 3 | |
| mode 2 | 2 7 8 0 1 6 4 3 5 | |
| mode 3 | 2 4 0 8 3 1 7 6 5 | GROUP 9 |
| mode 4 | 4 2 7 0 6 1 8 5 3 | |
| mode 5 | 2 1 0 8 5 6 7 4 3 | |
| mode 6 | 2 6 4 1 7 0 5 8 3 | |

(continued)

| B | A = mode 7 | |
|---|---|---|
| mode 7 | 2 7 4 0 8 6 1 5 3 | |
| mode 8 | 2 8 7 4 1 0 3 6 5 | |

| B | A = mode 8 | |
|---|---|---|
| outside | --------- | |
| mode 0 | 2 0 8 1 3 4 6 5 7 | |
| mode 1 | 1 2 0 6 8 5 7 3 4 | |
| mode 2 | 2 8 7 1 0 3 6 5 4 | |
| mode 3 | 8 3 2 5 1 0 4 7 6 | GROUP 10 |
| mode 4 | 2 0 4 8 5 1 7 6 3 | |
| mode 5 | 2 1 0 8 5 3 6 4 7 | |
| mode 6 | 2 1 6 0 8 4 5 7 3 | |
| mode 7 | 2 7 8 4 0 6 1 5 3 | |
| mode 8 | 2 8 3 0 7 4 1 6 5 | |

The information about the prediction modes may be efficiently coded by combining prediction mode information of two subblocks **38** in one codeword. The stream of bits includes then the resulting codewords, wherein each codeword represents the prediction modes of the two subblocks. Table 2 lists exemplary binary codewords for code numbers (Code No.) between 0 and 80. The probability of a mode of the first subblock is indicated as Prob0 and the probability of a mode of the second subblock is indicated as Prob1.

Table 2

| Code No. | Prob0 | Prob1 | Codeword |
|---|---|---|---|
| 0 | 0 | 0 | 1 |
| 1 | 0 | 1 | 001 |
| 2 | 1 | 0 | 011 |
| 3 | 1 | 1 | 00001 |
| 4 | 0 | 2 | 00011 |
| 5 | 2 | 0 | 01001 |
| 6 | 0 | 3 | 01011 |
| 7 | 3 | 0 | 0000001 |
| 8 | 1 | 2 | 0000011 |
| 9 | 2 | 1 | 0001001 |
| 10 | 0 | 4 | 0001011 |
| 11 | 4 | 0 | 0100001 |
| 12 | 3 | 1 | 0100011 |
| 13 | 1 | 3 | 0101001 |
| 14 | 0 | 5 | 0101011 |
| 15 | 5 | 0 | 000000001 |
| 16 | 2 | 2 | 000000011 |

(continued)

| Code No. | Prob0 | Prob1 | Codeword |
|----------|-------|-------|-------------|
| 17 | 1 | 4 | 000001001 |
| 18 | 4 | 1 | 000001011 |
| 19 | 0 | 6 | 000100001 |
| 20 | 3 | 2 | 000100011 |
| 21 | 1 | 5 | 000101001 |
| 22 | 2 | 3 | 000101011 |
| 23 | 5 | 1 | 010000001 |
| 24 | 6 | 0 | 010000011 |
| 25 | 0 | 7 | 010001001 |
| 26 | 4 | 2 | 010001011 |
| 27 | 2 | 4 | 010100001 |
| 28 | 3 | 3 | 010100011 |
| 29 | 6 | 1 | 010101001 |
| 30 | 1 | 6 | 010101011 |
| 31 | 7 | 0 | 00000000001 |
| 32 | 0 | 8 | 00000000011 |
| 33 | 5 | 2 | 00000001001 |
| 34 | 4 | 3 | 00000001011 |
| 35 | 2 | 5 | 00000100001 |
| 36 | 3 | 4 | 00000100011 |
| 37 | 1 | 7 | 00000101001 |
| 38 | 4 | 4 | 00000101011 |
| 39 | 7 | 1 | 00010000001 |
| 40 | 8 | 0 | 00010000011 |
| 41 | 6 | 2 | 00010001001 |
| 42 | 3 | 5 | 00010001011 |
| 43 | 5 | 3 | 00010100001 |
| 44 | 2 | 6 | 00010100011 |
| 45 | 1 | 8 | 00010101001 |
| 46 | 2 | 7 | 00010101011 |
| 47 | 7 | 2 | 01000000001 |
| 48 | 8 | 1 | 01000000011 |
| 49 | 5 | 4 | 01000001001 |
| 50 | 4 | 5 | 01000001011 |
| 51 | 3 | 6 | 01000100001 |
| 52 | 6 | 3 | 01000100011 |
| 53 | 8 | 2 | 01000101001 |
| 54 | 4 | 6 | 01000101011 |

(continued)

| Code No. | Prob0 | Prob1 | Codeword |
|---|---|---|---|
| 55 | 5 | 5 | 01010000001 |
| 56 | 6 | 4 | 01010000011 |
| 57 | 2 | 8 | 01010001001 |
| 58 | 7 | 3 | 01010001011 |
| 59 | 3 | 7 | 01010100001 |
| 60 | 6 | 5 | 01010100011 |
| 61 | 5 | 6 | 01010101001 |
| 62 | 7 | 4 | 01010101011 |
| 63 | 4 | 7 | 0000000000001 |
| 64 | 8 | 3 | 0000000000011 |
| 65 | 3 | 8 | 0000000001001 |
| 66 | 7 | 5 | 0000000001011 |
| 67 | 8 | 4 | 0000000100001 |
| 68 | 5 | 7 | 0000000100011 |
| 69 | 4 | 8 | 0000000101001 |
| 70 | 6 | 6 | 0000000101011 |
| 71 | 7 | 6 | 0000010000001 |
| 72 | 5 | 8 | 0000010000011 |
| 73 | 8 | 5 | 0000010001001 |
| 74 | 6 | 7 | 0000010001011 |
| 75 | 8 | 6 | 0000010100001. |
| 76 | 7 | 7 | 0000010100011 |
| 77 | 6 | 8 | 0000010101001 |
| 78 | 8 | 7 | 0000010101011 |
| 79 | 7 | 8 | 0001000000001 |
| 80 | 8 | 8 | 0001000000011 |

With the nine prediction modes (Table 1) and the probabilities of the modes (Table 1, Table 2), a mode selection algorithm determines the mode according to which a particular subblock is predicted. In one embodiment of the present invention, the algorithm selects the mode using a sum of absolute differences (SAD) between the pixels a-p and the corresponding pixels in the original frame, and the above probabilities of the modes. The SAD and the probability table are used to select the mode for a particular subblock 38. The algorithm calculates a parameter *uError* for each of the nine possible modes Mode 0-8. The mode that provides the smallest *uError* is the mode selected for the subblock 38.

The *uError* is calculated as follows:

$$uError = SAD(\{a,...,p\},\{original\ frame\}) + rd\_quant[uMBQP] * uProb,$$

where *SAD({a,...,p},{original frame}* is the sum of absolute difference between the pixels a-p and the corresponding pixels in the original frame,

where *rd_quant[uMBQP]* is a table of constant values indexed by a quantization parameter *uMBQP*. *uMBQP* is given by

$$const\ U8\ rd\_quant[32] =$$

$$\{1,1,1,1,1,1,2,2,2,2,3,3,3,4,4,5,5,6,7,7,8,9,11,12,13,15,17,19,21,24,27,30\};$$

*and*

where *uProb* is the probability of the mode occurring, provided by the position in the mode probability table (Table 1).

For example, the prediction mode for the subblocks A is the Mode 1 and the prediction mode for the subblock B is the Mode 1. The string "1 6 2 5 3 0 4 8 7" indicates that the Mode 1 is also the most probable mode for the subblock C. The Mode 6 is the second most probable mode, etc. Thus, when the algorithm calculates *uError* for the Mode 0, the probability *uProb* is 5. Further, for the Mode 1 the probability *uProb* is 0, for the Mode 2 the probability *uProb* is 2, for the Mode 3 the probability *uProb* is 4, and so forth.

In addition to coding the luminance portion (Y) of the video frame, the video system 1 of the present invention may also predict the chrominance portions (U, V) of the video frame. The chrominance portions may be considered as chrominance planes (U and V-planes). Typically, the chrominance planes (U and V-planes) are a quarter of the size of a luminance plane. Thus, in a 16x16 macroblock a corresponding 8x8 block of pixels exists in both the U and V-planes. These 8x8 blocks are divided into 4x4 blocks. In general, separate prediction modes are not transmitted for chrominace blocks. Instead, the modes transmitted for the Y-plane blocks are used as prediction modes for the U and V-plane blocks.

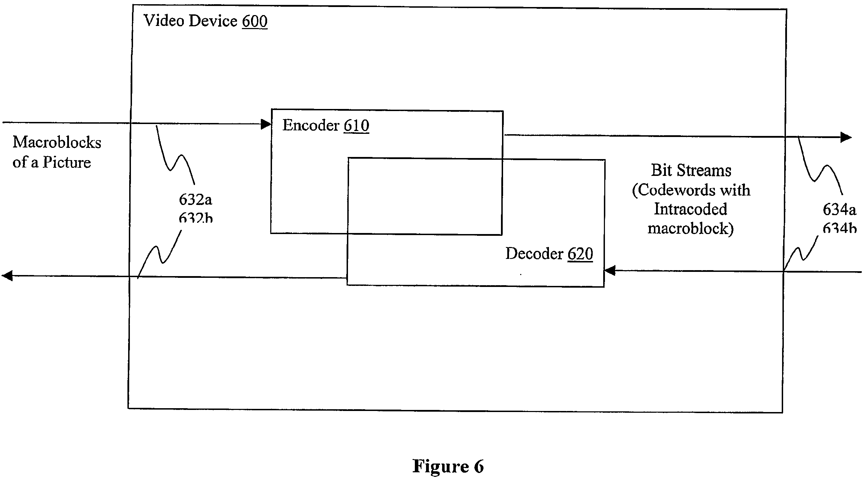

**Figure 6** illustrates a video device incorporated with the teachings of the present invention, in accordance with one embodiment. As illustrated, video device **600** includes encoder **610** and decoder **620** coupled to the inputs and outputs of the device. As described earlier, encoder **610** is designed to receive video frame data, divide the respective frame data into macroblocks and subblocks, and selectively intracode the subblocks as earlier described. Decoder **620** is designed to receive the intracoded subblocks and recover the video frame data as earlier described.

Encoder **610** and decoder **620** are similarly constituted as the earlier described encoder apparatus **1** and decoder apparatus **5**. In various embodiments, encoder **610** and decoder **620** may share at least in part their constituting tables and coding/decoding logics (as denoted by the intersecting blocks of encoder **610** and decoder **620**).

In various embodiments, video device **600** may be a wireless mobile phone, a palm sized computing device, such as a personal digital assistant, a laptop computing device, a desktop computing device, a server, and other computing devices of the like. In other embodiments, video device **600** may be a circuit board component, such as a video "add-on" circuit board (also referred to as a daughter circuit board), a motherboard, and other circuit boards of the like.

In yet other embodiments, instead of having both encoder **610** and decoder **620**, video device **600** may include encoder **610** only, as in the case of a video camera, or decoder **620** only, as in the case of a DVD player, a television, a display monitor, or a set-top box.

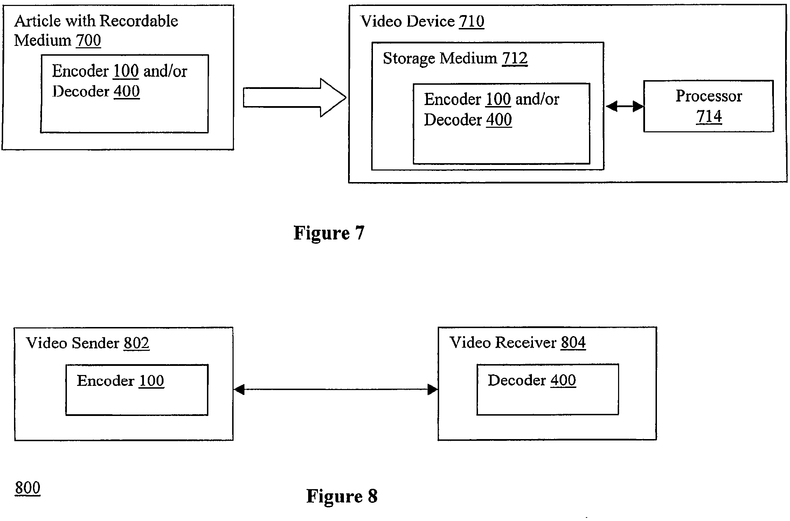

**Figure 7** illustrates an article of manufacture including a recordable medium **700** having programming instructions implementing a software embodiment of the earlier described encoder apparatus **1** and/or decoder apparatus **5**. The programming instructions are designed for use to program video device **710** to equip video device **710** with the encoding and decoding capabilities of the present invention.

For the embodiment, video device **710** include storage medium **712** to store at least a portion of a working copying of the programming instructions implementing the software embodiment of encoder apparatus **1** and/or decoder **5,** and at least one processor **714** coupled to storage medium **712** to execute the programming instructions.

Video device **712** may be any one of the earlier enumerated example device devices or other video devices of the like. Article **710** may e.g. be a diskette, a compact disk (CD), a DVD or other computer readable medium of the like. In other embodiments, article **710** may be a distribution server distributing encoder apparatus **1** and/or decoder apparatus **5** on line, via private and/or public networks, such as the Internet. In one embodiment, article **710** is a web server.

**Figure 8** illustrates an example system having video sender **802** and video receiver **804** communicatively coupled to each other as shown, with video sender **802** encoding a video in accordance with the teachings of the present invention, and providing the encoded video to video receiver **802,** and video receiver **802,** in tum decoding the encoded video to render the video. Video sender **802** and video receiver **804** are equipped with the earlier described encoder apparatus **1** and decoder apparatus **5** respectively.

An example of video sender **802** is a video server, whereas an example of a video receiver **804** is a client device coupled to video sender **802.**

In various alternate embodiments, encoding for Modes 4 and 6 are streamlined to employ only the pixels of the adjacent subblocks above the subblock being encoded in predicting the pixel values of the subblock being encoded. It is noted that streamlined mode 4 and 6 embodiments, as described page 24 line 29 to page 25 line 25 do not fall under the present invention. More specifically, the pixel values of the subblock being encoded are predicted under modes 4 and 6 as follows:

Streamlined Mode 4

$$a = (A + 2*B + C + 2)/4;$$
$$b,e = (B + 2*C + D + 2)/4;$$
$$c, f, i = (C + 2*D + E + 2)/4;$$
$$d, g, j, m = (D + 2*E + F + 2)/4;$$
$$h,k,n = (E + 2*F + G + 2)/4;$$
$$l, o = (F + 2*G + H + 2)/4;$$
$$p = (G + 3*H + 2)/4;$$

Streamlined Mode 6

$$a = (A + B + 1)/2;$$
$$b,i = (B + C + 1)/2;$$
$$c, j = (C + D + 1)/2;$$
$$d,k = (D + E + 1)/2;$$
$$1 = (E + F + 1)/2;$$
$$e = (A + 2*B + C + 2)/4;$$
$$f,m = (B + 2*C + D + 2)/4;$$
$$g, n = (C + 2*D + E + 2)/4;$$
$$h,o = (D + 2*E + F + 2)/4;$$
$$p = (E + 2*F + G + 2)/4;$$

Further, encoding for Mode 7 is streamlined to employ only the pixels of the adjacent subblock to the left of the subblock being encoded in predicting the pixel values of the subblock being encoded. More specifically, the pixel values of the subblock being encoded are predicted as follows:
Streamlined Mode 7

$$a = (I + J + 1)/2;$$
$$b = (I + 2*J + K + 2)/4;$$
$$c,e = (J + K + 1)/2;$$
$$d,f = (J + 2*K + L + 2)/4;$$
$$g,i = (K + L + 1)/2;$$
$$h, j = (K + 2*L + L + 2)/4; 1, n, k,$$
$$m, o, p = L;$$

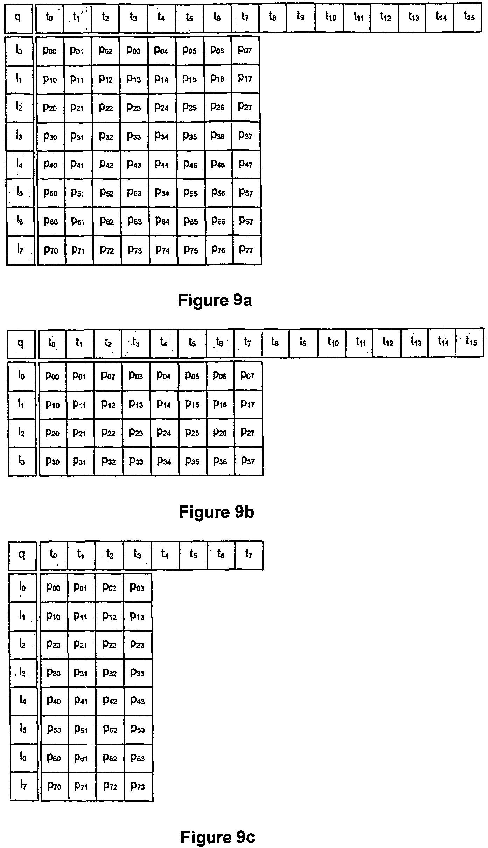

In yet other embodiments, a macroblock may be subdivided into MxN subblocks where MxN may be 8x8, 8x4 or 4x8 instead. For the purpose of this portion of the description, as illustrated in **Figures 9a-9c,** a pixel of a MxN subblock shall be referred to as $p_{ij}$, where the index i denotes a row position of the subblock and may assume a value of 0 through 7 in the cases of 8x8 and 8x4 subblocks or 0 through 3 in the case of 4x8 subblocks, and the index j denotes a column position of the subblock and may likewise assume a value of 0 through 7 in the cases of 8x8 and 4x8 subblocks or 0 through 3 in the case of 8x4 subblocks.
As illustrated, the predictor pixels of the adjacent subblocks above the subblock being encoded are referred to as $t_0$ through $t_{15}$, and the predictor pixels of the adjacent subblocks to the left of the subblock being encoded are referred to as $l_0$ through $l_{15}$.
For Modes 0 - 2, pixel values of a MxN subblock, whether MxN is 8x8, 8x4, or 4x8, are predicted as follows:
Mode 0

Where $t_0 - t_N$ and $l_0 - l_M$ are available,

$$p_{ij} = (t_0 + ... + t_N + l_0 + ... + l_M + N/2 + M/2) / (M + N);$$

Else if only $t_0 - t_N$ are available,

$$p_{ij} = (t_0 + ... + t_N + N/2) / N;$$

Else if only $l_0 - l_M$ are available,

$$p_{ij} = (l_0 + ... + l_M + M/2) / M;$$

Else

$$p_{ij} = 128;$$

$i = 0 - (N\text{-}1), j = 0 - (M\text{-}1).$

Mode 1

Where $t_0 - t_N$ are available

$$P_{ij} = t_j;$$

$i = 0 - (N\text{-}1), j = 0 - (M\text{-}1).$

Mode 2

Where $l_0 - l_{M\text{-}1}$ are available

$$P_{ij} = l_i;$$

$i = 0 - (N\text{-}1), j = 0 - (M\text{-}1).$

Mode 3
Where all $t_0 - t_{N\text{-}1}$ and $l_0 - l_{M\text{-}1}$ are available for prediction

| 4x8 subblock | 8x4 subblock | 8x8 subblock | predicted by |
|---|---|---|---|
| - | $p_{07}$ | $p_{07}$ | $(t_s + t_6 <<1 + t_7 + 2) >> 2$ |
| - | $p_{06}, p_{17}$ | $p_{06}, p_{17}$ | $(t_4 + t_5 <<1 + t_6 + 2) >> 2$ |
| - | $p_{05}, p_{16}, p_{27}$ | $p_{05}, p_{16}, p_{27}$ | $(t_3 + t_4 <<1 + t_5 + 2) >> 2$ |
| - | $p_{04}, p_{15}, p_{26}, p_{37}$ | $p_{04}, p_{15}, p_{26}, p_{37}$ | $( t_2 + t_3 <<1 + t_4 + 2) >> 2$ |
| $p_{03}$ | $p_{03}, p_{14}, p_{25}, p_{36}$ | $p_{03}, p_{14}, p_{25}, p_{36}, p_{47}$ | $(t_1 + t_2 <<1 + t_3 + 2 ) >> 2$ |
| $p_{02}, p_{13}$ | $p_{02}, p_{13}, p_{24}, p_{35}$ | $p_{02}, p_{13}, p_{24}, p_{35}, p_{46}, p_{57}$ | $( t_0 + t_1 <<1 + t_2 + 2 ) >> 2$ |
| $p_{01}, p_{12}, p_{23}$ | $p_{01}, p_{12}, p_{23}, p_{34}$ | $p_{01}, p_{22}, p_{23}, p_{34}, p_{45}, p_{56}, p_{67}$ | $( q + t_0 <<1 + t_1 + 2 ) >> 2$ |
| $p_{00}, p_{11}, p_{22}, p_{33}$ | $p_{00}, p_{11}, p_{22}, p_{33}$ | $p_{00}, p_{11}, p_{22}, p_{33}, p_{44}, p_{55}, p_{66}, p_{77}$ | $(l_0 + q <<1 + t_0 + 2 ) >> 2$ |
| $p_{10}, p_{21}, p_{32}, p_{43}$ | $p_{10}, p_{21}, p_{32}$ | $p_{10}, p_{21}, p_{32}, p_{43}, p_{54}, p_{65}, p_{76}$ | $( l_1 + l_0 <<1 + q + 2 ) >> 2$ |
| $p_{20}, p_{31}, p_{42}, p_{53}$ | $p_{20}, p_{31}$ | $p_{20}, p_{31}, p_{42}, p_{53}, p_{64}, p_{75}$ | $( l_2 + l_1 <<1 + l_0 + 2) >> 2$ |
| $p_{30}, p_{41}, p_{52}, p_{63}$ | $p_{30}$ | $p_{30}, p_{41}, p_{52}, p_{63}, p_{74}$ | $( l_3 + l_2 <<1 + l_1 + 2 ) >> 2$ |
| $p_{40}, p_{51}, p_{62}, p_{73}$ | - | $p_{40}, p_{51}, p_{62}, p_{73}$ | $(l_4 + l_3 <<1 + l_2 + 2) >> 2$ |

(continued)

| 4x8 subblock | 8x4 subblock | 8x8 subblock | predicted by |
|---|---|---|---|
| $p_{50}$, $p_{61}$, $p_{72}$ | - | $p_{50}$. $p_{61}$, $p_{72}$ | $( l_5 + l_4 <<1 + l_3 + 2 ) >> 2$ |
| $p_{60}$, $p_{71}$ | - | $p_{60}$, $p_{71}$ | $( l_6 + l_5 <<1 + l_4 + 2 ) >> 2$ |
| $p_{70}$ | - | $p_{70}$ | $( l_7 + l_6 <<1 + l_5 + 2 ) >> 2$ |

### Mode 4
Where all $t_0$ - $t_{N-1}$ and $l_0$ - $l_{M-1}$ are available for prediction,

| 4x8 subblock | 8x4 subblock | 8x8 subblock | predicted by |
|---|---|---|---|
| $P_{00}$ | $P_{00}$ | $P_{00}$ | $( t_2 + t_1 <<1 + t_0 + 2 ) >> 2$ |
| $p_{01}$, $p_{10}$ | $p_{01}$, $p_{10}$ | $p_{01}$, $p_{10}$ | $( t_3 + t_2 <<1 + t_1 + 2 ) >> 2$ |
| $p_{02}$, $p_{11}$, $p_{20}$ | $p_{02}$, $p_{11}$, $p_{20}$ | $p_{02}$, $p_{11}$, $p_{20}$ | $( t_4 + t_3 <<1 + t_2 + 2 ) >> 2$ |
| $p_{03}$, $p_{12}$, $p_{21}$, $p_{30}$ | $p_{03}$, $p_{12}$, $p_{21}$, $p_{30}$ | $p_{03}$, $p_{12}$, $p_{21}$, $p_{30}$ | $( t_5 + t_4 <<1 + t_3 + 2 ) >> 2$ |
| $p_{13}$, $p_{22}$, $p_{31}$, $p_{40}$ | $p_{04}$, $p_{13}$, $p_{22}$, $p_{31}$ | $p_{04}$, $p_{13}$, $p_{22}$, $p_{31}$, $p_{40}$ | $( t_6 + t_5 <<1 + t_4 + 2 ) >> 2$ |
| $p_{23}$, $p_{32}$, $p_{41}$, $p_{50}$ | $p_{05}$, $p_{14}$, $p_{23}$, $p_{32}$ | $p_{05}$, $p_{14}$, $p_{23}$, $p_{32}$, $p_{41}$, $p_{50}$ | $(t_7 + t_6 <<1 + t_5 + 2 ) >> 2$ |
| $p_{33}$, $p_{42}$, $p_{51}$, $p_{60}$ | $p_{06}$, $p_{15}$, $p_{24}$, $p_{33}$ | $p_{06}$, $p_{15}$, $p_{24}$, $p_{33}$, $p_{42}$, $p_{51}$, $p_{60}$ | $( t_8 + t_7 <<1 + t_6 + 2 ) >> 2$ |
| $p_{43}$, $p_{52}$, $p_{61}$, $p_{70}$ | $p_{07}$, $p_{16}$, $p_{25}$, $p_{34}$ | $p_{07}$, $p_{16}$, $p_{25}$, $p_{34}$, $p_{43}$, $p_{52}$, $p_{61}$, $p_{70}$ | $( t_9 + t_8 <<1 + t_7 + 2 ) >> 2$ |
| $p_{53}$, $p_{62}$, $p_{71}$ | $p_{17}$, $p_{26}$, $p_{35}$ | $p_{17}$, $p_{26}$, $p_{35}$, $p_{44}$, $p_{53}$, $p_{62}$, $p_{71}$ | $(t_{10} + t_9 <<1 + t_8 + 2) >> 2$ |
| $p_{63}$, $p_{72}$ | $p_{27}$, $p_{36}$ | $p_{27}$, $p_{36}$, $p_{49}$, $p_{54}$, $p_{63}$, $p_{72}$ | $(t_{11} + t_{10} <<1 + t_9 + 2) >> 2$ |
| $p_{73}$ | $p_{37}$ | $P_{37}$, $p_{46}$, $p_{55}$, $p_{64}$, $p_{73}$ | $(t_{12} + t_{11l} <<1 + t_{10} + 2) >> 2$ |
| - | - | $p_{47}$, $p_{56}$, $p_{65}$, $p_{74}$ | $(t_{13} + t_{12} << + t_{11} + 2) >> 2$ |
| - | - | $p_{57}$, $p_{66}$, $p_{75}$ | $( t_{14} + t_{13} <<1 + t_{12} + 2 ) >> 2$ |
| - | - | $p_{67}$, $p_{76}$ | $(t_{15} + t_{14} <<1 + t_{13} + 2) >> 2$ |
| - | - | $p_{77}$ | $(t_{15} + t_{15} <<1 + t_{14} + 2 ) >> 2$ |

### Mode 5
Where all $t_0$ - $t_{N-1}$ and $l_0$ - $l_{M-1}$ are available for prediction, then

| 4x8 subblock | 8x4 subblock | 8x8 subblock | predicted by |
|---|---|---|---|
| - | $p_{07}$ | $p_{07}$ | $( t_6 + t_7 + 1 ) >> 1$ |
| - | $p_{17}$ | $p_{17}$ | $(t_5 + t_6 <<1 + t_7 + 2) >> 2$ |
| - | $p_{05}$, $p_{27}$ | $p_{06}$, $P_{27}$ | $( t_5 + ts + 1 ) >> 1$ |
| - | $p_{16}$, $p_{37}$ | $P_{16}$, $P_{37}$ | $( t_4 + t_5 <<1 + t_6 + 2 ) >> 2$ |
| - | $p_{05}$, $p_{26}$ | $P_{05}$, $P_{26}$, $P_{47}$ | $( t_4 + t_5 + 1) >> 1$ |
| - | $p_{15}$, $P_{36}$ | $P_{15}$, $P_{36}$, $P_{57}$ | $( t_3 + t_4 <<1 + t_5 + 2 ) >> 2$ |
| - | $p_{04}$, $P_{25}$ | $p_{04}$, $p_{25}$, $p_{46}$, $p_{67}$ | $(t_3 + t_4 + 1) >> 1$ |
| - | $p_{14}$, $p_{35}$ | $p_{14}$, $p_{35}$, $p_{56}$, $p_{77}$ | $( t2 + t_3 <<1 + t_4 + 2 ) >> 2$ |
| $p_{03}$ | $p_{03}$, $p_{24}$ | $p_{03}$, $p_{24}$, $p_{45}$, $p_{66}$ | $( t_2 + t_3 + 1 ) >> 1$ |
| $p_{13}$ | $p_{13}$, $p_{34}$ | $p_{13}$, $p_{34}$, $p_{55}$, $p_{76}$ $p_{34}$, | $( t_1 + t_2 <<1 + t_3 + 2 ) >> 2$ |
| $p_{02}$, $p_{23}$ | $p_{02}$, $p_{23}$ | $p_{02}$, $p_{23}$, $p_{44}$, $p_{65}$ | $( t_1 + t_2 + 1 ) >> 1$ |
| $p_{12}$, $p_{33}$ | $p_{12}$, $p_{33}$ | $p_{12}$, $p_{33}$, $p_{54}$, $p_{75}$ | $( t_0 + t_1 <<1 + t_2 + 2 ) >> 2$ |

(continued)

| 4x8 subblock | 8x4 subblock | 8x8 subblock | predicted by |
|---|---|---|---|
| $p_{01}$, $p_{22}$, $p_{43}$ | $p_{01}$, $p_{22}$ | $p_{01}$, $p_{22}$, $p_{43}$, $p_{64}$ | $( t_0 + t_1 + 1 ) >> 1$ |
| $p_{11}$, $p_{32}$, $p_{53}$ | $p_{11}$, $p_{32}$ | $p_{11}$, $p_{32}$, $p_{53}$, $p_{74}$ | $( q + t_0<<1 + 2 ) >> 2$ |
| $p_{00}$, $p_{21}$, $p_{42}$, $p_{63}$ | $p_{00}$, $p_{21}$ | $p_{00}$, $p_{21}$, $p_{42}$, $p_{63}$ | $( q + t_0 + 1 ) >> 1$ |
| $P_{10}$, $p_{11}$, $p_{52}$, $p_{73}$ | $p_{10}$, $p_{31}$ | $p_{10}$, $p_{31}$, $p_{52}$, $p_{73}$ | $( l_o + q<<1 + to + 2 ) >> 2$ |
| $p_{20}$, $p_{41}$, $p_{62}$ | $p_{20}$ | $p_{20}$, $p_{41}$, $p_{62}$ | $( l_1 + l_0<<1 + q + 2 ) » 2$ |
| $p_{30}$, $p_{52}$, $p_{72}$ | $p_{30}$ | $p_{30}$, $p_{51}$, $p_{72}$ | $(l_2 + l_1<<1 + l_0 + 2 ) >> 2$ |
| $p_{40}$, $p_{61}$ | - | $p_{40}$, $p_{61}$ | $(l_3 + l_2 <<1 + l_1 + 2 ) >> 2$ |
| $p_{50}$, $p_{71}$ | - | $p_{50}$, $p_{71}$ | $( l_4 + l_3<<1 + l_2 + 2 ) >> 2$ |
| $P_{60}$ | - | $p_{60}$ | $( l_5 + l_4<<1 + l_3 + 2 ) >> 2$ |
| $p_{70}$ | - | $p_{70}$ | $( l_6 + l_5<<1 + l_4 + 2 ) >> 2$ |

<u>Mode 6</u>
Where all $t_0$ - $t_{N-1}$ and $l_0$ - $l_{M-1}$ are available for prediction

| 4x8 subblock | 8x4 subblock | 8x8 subblock | predicted by |
|---|---|---|---|
| $p_{00}$ | $p_{00}$ | $p_{00}$ | $( t_0 + t_1 + 1) >> 1$ |
| $p_{10}$ | $p_{10}$ | $p_{10}$ | $( t_0 + t_1<<1 + t_2 + 2 ) >> 2$ |
| $p_{01}$, $p_{10}$ | $p_{01}$, $p_{20}$ | $p_{01}$, $p_{20}$ | $( t_1 + t_2 + 1 ) >> 1$ |
| $P_{11}$, $P_{30}$ | $p_{21}$, $p_{30}$ | $p_{11}$, $p_{30}$ | $( t_1 + t_2<<1 + t_3 + 2) >> 2$ |
| $p_{02}$, $p_{21}$, $p_{40}$ | $p_{02}$, $p21$ | $p_{02}$, $p_{21}$, $p_{40}$ | $( t_2 + t_3 + 1) >> 1$ |
| $p_{12}$, $p_{31}$, $p_{50}$ | $p_{12}$, $p_{31}$ | $p_{12}$, $p_{31}$, $p_{50}$ | $( t_2 + t_3<<1 + t_4 + 2 ) >> 2$ |
| $p_{03}$, $p_{22}$, $p_{41}$, $p_{60}$ | $p_{03}$, $p_{12}$ | $p_{03}$, $p_{22}$, $p_{41}$, $p_{60}$ | $t_3 + t_4 + 1) >> 1$ |
| $p_{13}$, $p_{32}$, $p_{51}$, $p_{70}$ | $p_{13}$, $p_{32}$ | $p_{13}$, $p_{32}$, $p_{51}$, $p_{70}$ | $( t_3 + t_4<<1 + t_5 + 2 ) >> 2$ |
| $p_{23}$, $p_{42}$, $p_{61}$ | $p_{04}$, $p_{23}$ | $p_{04}$, $p_{23}$, $p_{42}$, $p_{61}$ | $( t_4 + t_5 + 1) >> 1$ |
| $p_{33}$, $p_{52}$, $p_{71}$ | $p_{14}$, $p_{33}$ | $p_{14}$, $p_{33}$, $p_{52}$, $P_{71}$ | $( t_4 + t_5<<1 + t_6 + 2 ) >> 2$ |
| $p_{43}$, $p_{62}$ | $p_{05}$, $p_{24}$ | $p_{05}$, $p_{24}$, $p_{43}$, $p_{62}$ | $( t_5 + t_6 + 1) >> 1$ |
| $p_{53}$, $p_{72}$ | $p_{15}$, $p_{34}$ | $p_{15}$, $p_{34}$, $p_{53}$, $p_{72}$ | $(t_5 + t_6<<1 + t_7 + 2) >> 2$ |
| $p_{63}$ | $p_{06}$, $p_{25}$ | $p_{06}$, $p_{25}$, $p_{44}$, $p_{63}$ | $( t_6 + t_7 + 1) >> 1$ |
| $p_{73}$ | $p_{16}$, $p_{35}$ | $p_{16}$, $p_{35}$, $p_{54}$, $p_{73}$ | $( t_6 + t_7<<1 + t_8 + 2 ) >> 2$ |
| - | $p_{07}$, $p_{26}$ | $p_{07}$, $p_{26}$, $p_{45,}$ $p_{64}$ | $( t_7 + t_8 + 1) >> 1$ |
| - | $p_{17}$, $p36$ | $p_{17}$, $p_{36}$, $p_{55}$, $p_{74}$ | $( t_7 + t8<<1 + t_9 + 2) >> 2$ |
| - | $p_{27}$ | $p_{27}$, $p_{46}$, $p_{65}$ | $( t_8 + t_9 + 1) >> 1$ |
| - | $p_{37}$ | $p_{37}$, $p_{56,}$ $p_{75}$ | $( t_8 + t_9<<1 + t_{10} + 2 ) >> 2$ |
| - | - | $p_{47}$, $p_{66}$ | $( t_9 + t_{10} + 1) >> 1$ |
| - | - | $p_{57}$, $p_{16}$ | $( t_9 + t_{10}<<1 + t_{11} + 2 ) >> 2$ |
| - | - | $p_{67}$ | $( t_{10} + t_{11} + 1) >> 1$ |
| - | - | $p_{77}$ | $( t_{10} + t_{11}<< + t_{12} + 2 ) >> 2$ |

<u>Mode 7</u>

Where all $t_0$ - $t_{N-1}$ and $l_0$ - $l_{M-1}$ are available for prediction

| 4x8 subblock | 8x4 subblock | 8x8 subblock | predicted by |
|---|---|---|---|
| $p_{00}$ | $p_{00}$ | $p_{00}$ | $(l_0 + l_1 + 1) >> 1$ |
| $p_{01}$ | $p_{01}$ | $p_{01}$ | $(l_0 + l_1<<1 + l_2 + 2) >> 2$ |
| $p_{10}, P_{02}$ | $p_{10}, p_{02}$ | $p_{10}, p_{02}$ | $(l_1 + l_2 + 1) >> 1$ |
| $p_{11}, p_{03}$ | $p_{11}, p_{03}$ | $p_{11}\ p_{03}$ | $(l_1 + l_2<<1 + l_3 + 2) >> 2$ |
| $p_{20}, p_{12}$ | $p_{20}, p_{12}, p_{04}$ | $p_{20}, p_{12}, p_{04}$ | $(l_2 + l_3 + 1) >> 1$ |
| $p_{21}, p_{13}$ | $p_{21}, p_{13}, p_{05}$ | $p_{21}, p_{13}, p_{05}$ | $(l_2 + l_3<<1 + l_4 + 2) >> 2$ |
| $p_{30}, p_{22}$ | $p_{30}, p_{22}, p_{14}, p_{06}$ | $p_{30}, p_{22}, p_{14}, p_{06}$ | $(l_3 + l_4 + 1) >> 1$ |
| $p_{31}, p_{23}$ | $p_{31}, p_{23}, p_{15}, p_{07}$ | $p_{31}, p_{23}, p_{15}, p_{07}$ | $(l_3 + l_4<<1 + l_5 + 2) >>2$ |
| $p_{40}, p_{32}$ | $p_{32}, p_{24}, p_{16}$ | $p_{40}, p_{32}, p_{24}, p_{16}$ | $(l_4 + l_5 + 1) >> 1$ |
| $p_{41}, p_{33}$ | $p_{33}, p_{25}, p_{17}$ | $p_{41}, p_{33}, p_{25}, p_{17}$ | $(l_4 + l_5<<1 + l_6 + 2) >> 2$ |
| $p_{50}, p_{42}$ | $p_{34}, p_{26}$ | $p_{50}, p_{42}, p_{34}, p_{26}$ | $(l_5 + l_6 + 1) >> 1$ |
| $P_{51}, p_{43}$ | $p_{35}, p_{27}$ | $p_{51}, p_{43}, p_{35}, p_{27}$ | $(l_5 + l_6<<1 + l_7 + 2) >> 2$ |
| $p_{60}, p_{52}$ | $p_{36}$ | $p_{60}, p_{52}, p_{44}, p_{36}$ | $(l_6 + l_7 + 1) >> 1$ |
| $p_{61}, p_{53}$ | $p_{37}$ | $p_{61}, p_{53}, p_{45}, p_{37}$ | $(l_6 + l_7<<1 + 1, + 2) >> 2$ |
| $p_{70}, p_{62}, p_{71}, p_{63}, p_{72}, p_{73}\ Po3$ | - | $p_{70}, p_{71}, p_{72}, p_{73}, p_{74}, p_{75}, p_{76}, p_{77}, p_{62}, p_{63}, p_{64}, p_{65}, p_{66}, p_{67}, p_{54}, p_{55}, p_{56}, p_{57}, p_{46}, p_{47}$ | $l_7$ |

Mode 8

Where all $t_0$ - $t_{N-1}$ and $l_0$ - $l_{M-1}$ are available for prediction, then

| 4x8 subblock | 8x4 subblock | 8x8 subblock | predicted by |
|---|---|---|---|
| - | $p_{07}$ | $p_{07}$ | $(t_4 + t_5<<1 + t_6 + 2) >> 2$ |
| - | $p_{06}$ | $p_{06}$ | $(t_3 + t_4<<1 + t_5 + 2) >> 2$ |
| - | $p_{05}, p_{17}$ | $p_{05}, p_{17}$ | $(t_2 + t_3<<1 + t_4 + 2) >> 2$ |
| - | $p_{04}, p_{16}$ | $p_{04}, p_{16}$ | $(t_1 + t_2<<1 + t_3 + 2) >>2$ |
| $p_{03}$ | $p_{03}, p_{15}\ p_{27}$ | $p_{03}, p_{15}, p_{27}$ | $(t_0 + t_1<<1 + t_2 + 2) >> 2$ |
| $p_{02}$ | $p_{02}, p_{14}, p_{26}$ | $p_{02}, p_{14}, p_{26}$ | $(q + to<<1 + t_1 + 2) >> 2$ |
| $p_{01}, p_{13}$ | $p_{01}, p_{13}, p_{25}, p_{37}$ | $p_{01}, p_{13}, p_{25}, p_{37}$ | $(l_0 + q<<1 + t_0 + 2) >> 2$ |
| $p_{00}, p_{12}$ | $p_{00}, p_{12}, p_{24}, p_{36}$ | $p_{00}, p_{12}, p_{24}, p_{36}$ | $(q + l_0 + 1) >> 1$ |
| $p_{10}, p_{22}$ | $p_{10}, p_{22}, p_{34}$ | $p_{10}, p_{22}, p_{34}, p_{46}$ | $(l_0 + l_1 + 1) >> 1$ |
| $p_{11}, p_{23}$ | $p_{11}, p_{23}, p_{35}$ | $p_{11}, p_{23}, p_{35}, p_{47}$ | $(q + l_0<<1 + l_1 + 2) >> 2$ |
| $p_{20}, p_{32}$ | $p_{20}, p_{32}$ | $p_{20}, p_{32}, p_{44}, p_{56}$ | $(l_1 + l_2 + 1) >> 1$ |
| $p_{21}, p_{33}$ | $p_{21}, p_{33}$ | $p_{21}, p_{33}, p_{45}, p_{57}$ | $(l_0 + l_1<<1 + l_2 + 2) >> 2$ |
| $p_{30}, p_{42}$ | $p_{30}$ | $p_{30}, p_{42}, p_{54}, p_{66}$ | $(l_2 + l_3 + 1) >> 1$ |
| $p_{31}, p_{43}$ | $p_{31}$ | $p_{31}, p_{43}, p_{55}, p_{67}$ | $(l_2 + l_2<<1 + l_3 + 2) >> 2$ |
| $p_{40}, p_{52}$ | - | $p_{40}, p_{52}, p_{64}, p_{76}$ | $(l_3 + l_4 + 1) >> 1$ |
| $p_{41}, P_{53}$ | - | $p_{41}, p_{53}, p_{65}, p_{77}$ | $(l_2 + l_3<<1 + l_4 + 2) >> 2$ |
| $p_{50}, p_{62}$ | - | $p_{50}, p_{62}, p_{74}$ | $(l_4 + l_5 + 1) >> 1$ |

(continued)

| 4x8 subblock | 8x4 subblock | 8x8 subblock | predicted by |
|---|---|---|---|
| $p_{51}$, $p_{63}$ | - | $p_{51}$, $p_{63}$, $p_{75}$ | $( I_3 + I_4 <<1 + I_5 + 2 ) >> 2$ |
| $p_{60}$, $p_{72}$ | - | $p_{60}$, $p_{72}$ | $( I_5 + I_6 + 1) >> 1$ |
| $p_{61}$, $p_{73}$ | - | $p_{61}$, $p_{73}$ | $( I_4 + I_5 <<1 + I_6 + 2 ) >> 2$ |
| $p_{70}$ | - | $p_{70}$ | $( I_6 + I_7 + 1) >> 1$ |
| $p_{71}$ | - | $p_{71}$ | $( I_5 + I_6 <<1 + I_7 + 2 ) >> 2$ |

Conclusion and Epilogue

Thus, it can be seen from the above descriptions, a novel method for intracoding and decoding video frame data, including encoders, decoders, devices and systems incorporated with the method have been described.

While the present invention has been described in terms of the foregoing embodiments and example applications, those skilled in the art will recognize that the invention is not limited to the embodiments and example application described.

Thus, the description is to be regarded as illustrative instead of restrictive on the present invention.

**Claims**

1.  An apparatus comprising:

    an encoder adapted to perform a selected one of intracoding of a macroblock of video data and decoding of an intracoded macroblock of video data, where an intracoded macroblock includes a first MxN subblock of pixel values predicted under a first prediction mode as follows:

$$\text{where } t_0 - t_{N-1} \text{ and } l_0 - l_{M-1} \text{ are available,}$$

$$P_{ij} = (t_0 + ... + t_{N-1} + l_0 + ... + l_{M-1} + N/2 + M/2) / (M + N);$$

$$\text{Else if only } t_0 - t_{N-1} \text{ are available,}$$

$$P_{ij} = (t_0 + ... + t_{N-1} + N/2) / N;$$

$$\text{Else if only } l_0 - l_{M-1} \text{ are available,}$$

$$P_{ij} = (l_0 + ... + l_{M-1} + M/2) / M;$$

$$\text{Else}$$

$$P_{ij} = 128;$$

$$\text{for } i = 0 - (N-1),\ j = 0 - (M-1);$$

    where the first MxN subblock is a selected one of a 4x8 subblock, a 8x4 subblock, and a 8x8 subblock;
    $P_{ij}$ are pixel values of the MxN subblock, with i and j being indices denoting row and columns positions within the MxN subblock;
    where $t_0 - t_{N-1}$ are available, $t_0 - t_{N-1}$ are pixel values of an adjacent subblock above the MxN subblock;
    where $t_N - t_{2N-1}$ are available, $t_N - t_{2N-1}$ are pixel values of an adjacent subblock above and to the right of the MxN subblock;
    where $l_0 - l_{M-1}$ are available, $l_0 - l_{M-1}$ are pixel values of an adjacent subblock to the left of the MxN subblock;
    where the intracoded macroblock includes a second MxN subblock of pixel values predicted under a diagonal prediction mode selected from mode 4, mode 6, and mode 7;
    wherein the second MxN subblock and all available adjacent subblocks are the same size as the first MxN subblock; ,
wherein under said mode 4, pixel values are predicted in accordance with a selected one of:

| 4x8 subblock | 8x4 subblock | 8x8 subblock | predicted by |
|---|---|---|---|
| $p_{00}$ | $p_{00}$ | $p_{00}$ | $(t_2 + t_1 \ll 1 + t_0 + 2) \gg 2$ |
| $p_{01}, p_{10}$ | $p_{01}, p_{10}$ | $p_{01}, p_{10}$ | $(t_3 + t_2 \ll 1 + t_1 + 2) \gg 2$ |
| $p_{02}, p_{11}, p_{20}$ | $p_{02}, p_{11}, p_{20}$ | $p_{02}, p_{11}, p_{20}$ | $(t_4 + t_3 \ll 1 + t_2 + 2) \gg 2$ |
| $p_{03}, p_{12}, p_{21}, p_{30}$ | $p_{03}, p_{12}, p_{21}, p_{30}$ | $p_{03}, p_{12}, P_{21}, p_{30}$ | $(t_5 + t_4 \ll 1 + t_3 + 2) \gg 2$ |
| $p_{13}, p_{22}, p_{31}, p_{40}$ | $p_{04}, p_{13}, P22. p_{31}$ | $p_{04}, p_{13}, p_{22}, p_{31}, p_{40}$ | $(t_6 + t_5 \ll 1 + t_4 + 2) \gg 2$ |
| $p_{23}, p_{32}, p_{41}, p_{50}$ | $p_{05}, p_{14}, p_{23}, p_{32}$ | $p_{05}, p_{14}, p_{23}, p_{32}, p_{41}, p_{50}$ | $(t_7 + t_6 \ll 1 + t_5 + 2) \gg 2$ |
| $p_{33}\ p_{42}, p_{52}, p_{60}$ | $p_{06}, p_{15}, p_{24}, p_{33}$ | $p_{06}, p_{15}, p_{24}, p_{33}, p_{42}, p_{51}, p_{60}$ | $(t_8 + t_7 \ll 1 + t_6 + 2) \gg 2$ |
| $p_{43}, p_{52}, p_{61}, p_{70}$ | $p_{07}, p_{16}, p_{25}, P_{34}$ | $p_{07}, p_{16}, p_{25}, p_{34}, p_{43}, p_{52}, p_{61}, p_{70}$ | $(t_9 + t_8 \ll 1 + t_7 + 2) \gg 2$ |
| $P_{53}, p_{62}, p_{71}$ | $p_{17}, p_{26}, p_{35}$ | $p_{17}, p_{26}, p_{35}, p_{44}, p_{53}, p_{62}, p_{71}$ | $(t_{10} + t_9 \ll 1 + t_8 + 2) \gg 2$ |
| $p_{63}, p_{72}$ | $p_{27}, p_{36}$ | $p_{27}, p_{36}, p_{45}, p_{54}, p_{63}, p_{72}$ | $(t_{11} + t_{10} \ll 1 + t_9 + 2) \gg 2$ |
| $p_{73}$ | $p_{37}$ | $p_{37}, p_{46}, p_{55}, p_{64}, p_{73}$ | $(t_{12} + t_{11} \ll 1 + t_{10} + 2) \gg 2$ |
| - | - | $p_{47}, p_{56}, p_{65}, p_{74}$ | $(t_{13} + t_{12} \ll 1 + t_{11} + 2) \gg 2$ |
| - | - | $p_{57}, p_{66}, p_{75}$ | $(t_{14} + t_{13} \ll 1 + t_{12} + 2) \gg 2$ |
| - | - | $p_{67}, p_{76}$ | $+ t_{14} \ll 1 + t_{13} + 2) \gg 2$ |
| - | - | $p_{77}$ | $(t_{15} + t_{15} \ll 1 + t_{14} + 2) \gg 2$ |

wherein under said mode 6, pixel values are predicted in accordance with a selected one of:

| 4x8 subblock | 8x4 subblock | 8x8 subblock | predicted by |
|---|---|---|---|
| $p_{00}$ | $p_{00}$ | $p_{00}$ | $(t_0 + t_1 + 1) \gg 1$ |
| $p_{10}$ | $p_{10}$ | $p_{10}$ | $(t_0 + t_1 \ll 1 + t_2 + 2) \gg 2$ |
| $p_{01}, p_{20}$ | $p_{01}, p_{20}$ | $p_{01}, p_{20}$ | $(t_1 + t_2 + 1) \gg 1$ |
| $p_{11}, p_{30}$ | $P_{11}, p_{30}$ | $p_{11}, p_{30}$ | $(t_1 + t_2 \ll 1 + t_3 + 2) \gg 2$ |
| $p_{02}, p_{21}, p_{40}$ | $p_{02}, p_{21}$ | $p_{02}, p_{21}, p_{40}$ | $(t_2 + t_3 + 1) \gg 1$ |
| $p_{12}, p_{31}, p_{50}$ | $p_{12}, p_{31},$ | $p_{12}, p_{31}, p_{50}$ | $(t_2 + t_3 \ll 1 + t_4 + 2) \gg 2$ |
| $p_{03}, p_{22}, p_{41}, p_{60}$ | $p_{03}, p_{22}$ | $p_{03}, p_{22}, p_{41}, p_{60}$ | $(t_3 + t_4 + 1) \gg 1$ |
| $p_{13}, p_{32}, p_{51}, p_{70}$ | $p_{13}, p_{32}$ | $p_{13}, p_{32}, p_{51}, p_{70}$ | $(t_3 + t_4 \ll 1 + t_5 + 2) \gg 2$ |
| $p_{23}, p_{42}, p_{61}$ | $p_{04}, p_{23}$ | $p_{04}, p_{23}, p_{42}, p_{61}$ | $(t_4 + t_5 + 1) \gg 1$ |
| $p_{33}, p_{52}, p_{71}$ | $p_{14}, p_{33}$ | $p_{14}, p_{33}, p_{52}, p_{71}$ | $(t_4 + t_5 \ll 1 + t_6 + 2) \gg 2$ |
| $p_{43}, p_{362}$ | $p_{05}, p_{24}$ | $p_{05}, p_{24}, p_{43}, p_{62}$ | $(t_5 + t_6 + 1) \gg 1$ |
| $p_{53}, p_{72}$ | $p_{15}, p_{34}$ | $p_{15}, p_{34}, p_{53}, p_{72}$ | $(t_5 + t_6 \ll 1 + t_7 + 2) \gg 2$ |
| $p_{63}$ | $p_{06}, p_{25}$ | $p_{06}, p_{35}, p_{54}, p_{63}$ | $(t_6 + t_7 + 1) \gg 1$ |
| $p_{73}$ | $p_{16}, p_{35}$ | $p_{16}, p_{25}, p_{44}, p_{73}$ | $(t_6 + t_7 \ll 1 + t_8 + 2) \gg 2$ |
| - | $p_{07}, p_{26}$ | $p_{07}, p_{26}, p_{45}, p_{64}$ | $(t_7 + t_8 + 1) \gg 1$ |
| - | $p_{17}, p_{36}$ | $p_{17}, p_{36}, p_{55}, p_{74}$ | $(t_7 + t_8 \ll 1 + t_9 + 2) \gg 2$ |
| - | $p_{27}$ | $p_{27}, p_{46}. p_{65}$ | $(t_8 + t_9 + 1) \gg 1$ |
| - | $p_{37},$ | $p_{37}, p_{56}, p_{75}$ | $(t_8 + t_9 \ll 1 + t_{10} + 2) \gg 2$ |

(continued)

| 4x8 subblock | 8x4 subblock | 8x8 subblock | predicted by |
|---|---|---|---|
| - | - | $p_{47}, p_{66}$ | $(t_9 + t_{10} + 1) >> 1$ |
| - | - | $p_{57}, p_{76}$ | $(t_9 + t_{10}<<1 + t_{11} + 2) >> 2$ |
| - | - | $p_{67}$ | $(t_{10} + t_{11} + 1) >> 1$ |
| - | - | $p_{77}$ | $(t_0 + t_{11}<<1 + t_{12} + 2) >> 2$ |

and wherein under said mode 7, pixel values are predicted in accordance with a selected one of:

| 4x8 subblock | 8x4 subblock | 8x8 subblock | predicted by |
|---|---|---|---|
| $p_{00}$ | $p_{00}$ | $p_{00}$ | $(l_0 + l_1 +1) >> 1$ |
| $p_{01}$ | $p_{01}$ | $p_{01}$ | $(l_0 + l_1<<1+l_2 + 2) >> 2$ |
| $p_{10}, p_{02}$ | $p_{10}, p_{02}$ | $p_{10}, p_{02}$ | $(l_1 + l_2 +1) >> 1$ |
| $p_{11}, p_{03}$ | $p_{11}, p_{03}$ | $p_{11}, p_{03}$ | $(l_1 + l_2<<1 + l_3 + 2) >> 2$ |
| $p_{20}, p_{12}$ | $p_{20}, p_{12}, p_{04}$ | $p_{20}, p_{12}, p_{04}$ | $(l_2 + l_3 + 1) >> 1$ |
| $P_{21}, p_{13}$ | $p_{21}, p_{13}, p_{05}$ | $p_{21}, p_{13}, p_{05}$ | $(l_2 + l_3<<1 + l_4 + 2) >> 2$ |
| $p_{30}, p_{22}$ | $p_{30}, p_{22}, p_{14}, p_{06}$ | $p_{30}, p_{22}, p_{14}, p_{06}$ | $(l_3 + l_4 + 1) >> 1$ |
| $p_{31}, p_{23}$ | $p_{31}, p_{23}, p_{15}, p_{07}$ | $p_{31}, P_{23}, P_{15}, p_{07}$ | $(l_3 + l_4<<1 + l_5 + 2) >> 2$ |
| $p_{40}, p_{32}$ | $p_{32}, p_{24}, p_{16}$ | $p_{40}, p_{32}, p_{24}, p_{16}$ | $(l_4 + l_5 +1) >> 1$ |
| $p_{41}, p_{33}$ | $p_{33}, p_{25}, p_{17}$ | $p_{41}, p_{33}, p_{25}, p_{17}$ | $(l_4 + l_5<<1 + l_6 + 2) >> 2$ |
| $p_{50}, p_{42}$ | $p_{34}, p_{26}$ | $p_{50}, p_{42}, p_{34}, p_{26}$ | $(l_5 + l_6 + 1) >> 1$ |
| $p_{51}, P43$ | $p_{35}, p_{27}$ | $p_{51}, p_{43}, p_{35}, p_{27}$ | $(l_5 + l_6<<1+l_7 + 2) >> 2$ |
| $p_{60}, p_{52}$ | $p_{36}$ | $p_{60}, p_{52}, p_{44}, p_{36}$ | $(l_6 + l_7 + 1) >> 1$ |
| $p_{61}, p_{53}$ | $p_{37}$ | $p_{61}, p_{53}, p_{45}, p_{37}$ | $(l_6 + l_7<<1+l_7 + 2) >> 2$ |
| $p_{70}, p_{62}, p_{71}, p_{63}, p_{72}, p_{73}$ | - | $p_{70}, p_{71}, p_{72}, p_{73}, p_{74}, p_{75}. p_{76}, p_{77}, p_{62}, p_{63}, p_{64}, p_{65}, p_{66}, p_{67}, p_{54}, p_{55}, p_{56}, p_{57}, p_{46}, p_{47}$ | $l_7$ |

**Patentansprüche**

1. Vorrichtung, die Folgendes umfasst:

einen Codierer zum Ausführen eines Vorgangs ausgewählt aus Intracodieren eines Makroblocks von Videodaten und Decodieren eines intracodierten Makroblocks von Videodaten, wobei ein intracodierter Makroblock einen ersten MxN Subblock von Pixelwerten beinhaltet, die unter einem ersten Vorhersagemodus wie folgt vorhergesagt werden:

wo $t_0 - t_{N-1}$ und $l_0 - l_{M-1}$ zur Verfügung stehen:

$P_{ij} = (t_0 +...+ t_{N-1} + l_0 +...+ l_{M-1} + N/2 + M/2)/(M+N)$;
sonst, wenn nur $t_0 - t_{N-1}$ zur Verfügung stehen:
$P_{ij} = (t_0 +...+ t_{N-1} + N/2)/N$;
sonst, wenn nur $l_0 - l_{M-1}$ zur Verfügung stehen:
$P_{ij} = (l_0 +...+ l_{M-1} + M/2)/M$;
sonst

$P_{ij} = 128;$
für $i = 0 - (N-1)$, $j = 0 - (M-1)$;

wobei der erste MxN Subblock ein Subblock ausgewählt aus 4x8 Subblock, 8x4 Subblock und 8x8 Subblock ist; $P_{ij}$ Pixelwerte des MxN Subblocks sind, wobei i und j Indexe sind, die Reihen - und Spaltenpositionen in dem MxN Subblock bezeichnen;

wo $t_0 - t_{N-1}$ zur Verfügung stehen, sind $t_0 - t_{N-1}$ Pixelwerte eines benachbarten Subblocks über dem MxN Subblock;
wo $t_N - t_{2N-1}$ zur Verfügung stehen, sind $t_N - t_{2N-1}$ Pixelwerte eines benachbarten Subblocks über und rechts von dem MxN Subblock;
wo $l_0 - l_{M-1}$ zur Verfügung stehen, sind $l_0 - l_{M-1}$ Pixelwerte eines benachbarten Subblocks links von dem MxN Subblock;

wo der intracodierte Makroblock einen zweiten MxN Subblock von Pixelwerten beinhaltet, die unter einem diagonalen Vorhersagemodus vorhergesagt werden, der ausgewählt ist aus Modus 4, Modus 6 und Modus 7;
wobei der zweite MxN Subblock und alle verfügbaren benachbarten Subblöcke dieselbe Größe haben wie der erste MxN Subblock;
wobei unter dem genannten Modus 4 Pixelwerte gemäß einem Subblock ausgewählt aus den folgenden Subblöcken vorhergesagt werden:

| 4×8 Subblock | 8×4 Subblock | 8×8 Sublock | Vorhergesagt durch |
|---|---|---|---|
| $p_{00}$ | $p_{00}$ | $p_{00}$ | $(t_2 + t_1 <<1 + t_0 + 2) >> 2$ |
| $p_{01}$, $p_{10}$ | $p_{01}$, $p_{10}$ | $p_{01}$, $p_{10}$ | $(t_3 + t_2 <<1 + t_1 + 2) >> 2$ |
| $p_{01}$, $p_{11}$, $p_{20}$ | $p_{02}$, $p_{11}$, $p_{20}$ | $p_{02}$, $p_{11}$ $p_{20}$ | $(t_4 + t_3 <<1 + t_2 + 2) >> 2$ |
| $p_{03}$, $p_{12}$, $p_{21}$, $p_{30}$ | $p_{03}$, $p_{12}$, $p_{21}$, $p_{30}$ $p_{30}$ | $p_{03}$, $p_{12}$, $p_{21}$, $p_{30}$ | $(t_5 + t_4 <<1 + t_3 + 2) >> 2$ |
| $p_{13}$, $p_{22}$, $p_{31}$, $p_{40}$ | $p_{04}$, $p_{13}$, $p_{22}$, $p_{31}$ | $p_{04}$, $p_{13}$, $p_{22}$, $p_{31}$, $P_{40}$ | $(t_6 + t_3 <<1 + t_4 + 2) >> 2$ |
| $p_{23}$, $p_{32}$, $p_{41}$, $p_{50}$ | $p_{05}$, $p_{14}$, $p_{23}$, $p_{32}$ | $p_{05}$, $p_{14}$, $p_{23}$, $p_{32}$ $p_{41}$, $p_{50}$ | $(t_7 + t_4 <<1 + t_5 + 2) >> 2$ |
| $p_{33}$, $p_{42}$, $p_{51}$, $p_{60}$ | $p_{06}$, $p_{15}$, $p_{24}$, $p_{33}$ | $p_{05}$, $p_{15}$, $p_{24}$, $p_{22}$, $p_{42}$, $p_{51}$, $p_{60}$ | $(t_8 + t_7 <<1 + t_6 + 2) >> 2$ |
| $p_{43}$, $p_{52}$, $p_{51}$, $p_{70}$ | $p_{07}$, $p_{16}$, $p_{25}$, $p_{34}$ | $p_{07}$, $p_{16}$, $p_{25}$, $p_{34}$, $p_{43}$, $p_{52}$, $p_{61}$, $p_{70}$ | $(t_9 + t_8 <<1 + t_7 + 2) >> 2$ |
| $p_{53}$, $p_{62}$, $p_{71}$ | $p_{17}$, $p_{25}$, $p_{35}$ | $p_{17}$, $p_{25}$, $p_{35}$, $p_{44}$, $p_{53}$, $p_{62}$, $p_{71}$ | $(t_{10} + t_9 <<1 + t_8 + 2) >> 2$ |
| $p_{53}$, $p_{72}$ | $p_{27}$, $p_{38}$ | $p_{27}$, $p_{35}$, $p_{45}$, $p_{54}$, $p_{53}$, $p_{72}$, | $(t_{11} + t_{10} <<1 + t_9 + 2) >> 2$ |
| $p_{73}$ | $p_{37}$ | $p_{37}$, $p_{46}$, $p_{35}$, $p_{64}$, $p_{73}$ | $(t_{12} + t_{11} <<1 + t_{10} + 2) >> 2$ |
| - | - | $p_{47}$, $p_{56}$ $p_{65}$, $p_{74}$ | $(t_{13} + t_{12} <<1 + t_{11} + 2) >> 2$ |
| - | - | $p_{57}$, $p_{66}$, $p_{75}$ | $(t_{14} + t_{13} <<1 + t_{12} + 2) >> 2$ |
| - | - | $p_{67}$, $p_{76}$ | $(t_{15} + t_{14} <<1 + t_{13} + 2) >> 2$ |
| - | - | $p_{77}$ | $(t_{15} + t_{15} <<1 + t_{14} + 2) >> 2$ |

wobei unter dem genannten Modus 6 Pixelwerte gemäß einem Subblock ausgewählt aus den folgenden Subblöcke vorhergesagt werden:

| 4×8 Subblock | 8×4 Subblock | 8×8 Subblock | Vorhergesagt durch |
|---|---|---|---|
| $p_{00}$ | $p_{00}$ | $p_{00}$ | $(t_0 + t_1 + 1) >> 1$ |
| $p_{10}$ | $p_{10}$ | $p_{10}$ | $(t_0 + t_1 <<1 + t_2 + 2) >> 2$ |
| $p_{01}$, $p_{20}$ | $p_{01}$, $p_{20}$ | $p_{01}$, $p_{20}$ | $(t_1 + t_2 + 1) >> 1$ |
| $p_{11}$, $p_{30}$ | $p_{11}$, $p_{30}$ | $p_{11}$, $p_{30}$ | $(t_1 + t_2 <<1 + t_3 + 2) >> 2$ |
| $p_{02}$, $p_{21}$, $p_{40}$ | $p_{02}$, $p_{21}$ | $p_{02}$, $p_{21}$, $p_{40}$ | $(t_2 + t_3 + 1) >> 1$ |
| $p_{12}$, $p_{31}$, $p_{50}$, | $p_{12}$, $p_{31}$ | $p_{12}$, $p_{31}$, $p_{50}$ | $(t_2 + t_3 <<1 + t_4 + 2) >> 2$ |
| $p_{03}$, $p_{22}$, $p_{41}$, $p_{60}$ | $p_{03}$, $p_{22}$ | $p_{03}$, $p_{22}$, $p_{41}$, $p_{60}$, | $(t_3 + t_4 + 1) >> 1$ |

(fortgesetzt)

| 4×8 Subblock | 8×4 Subblock | 8×8 Subblock | Vorhergesagt durch |
|---|---|---|---|
| $p_{13}, p_{32}, p_{51}, p_{70}$ | $p_{13}, p_{32}$ | $p_{13}, p_{32}, p_{51}, p_{70},$ | $(t_3 + t_4 <\!<1 + t_5 + 2) >\!> 2$ |
| $p_{23}, p_{42}, p_{61},$ | $p_{04}, p_{23}$ | $p_{04}, p_{23}, p_{42}, p_{61}$ | $(t_4 + t_5 + 1) >\!> 1$ |
| $p_{33}, p_{52}, p_{71}$ | $p_{14}, p_{33}$ | $p_{14}, p_{33}, p_{52}, p_{71}$ | $(t_4 + t_5 <\!<1 + t_6 + 2) >\!> 2$ |
| $p_{43}\ p_{362}$ | $p_{05}, p_{24}$ | $p_{05}, p_{24}, p_{43}, p_{62}$ | $(t_5 + t_6 + 1) >\!> 1$ |
| $p_{53}, p_{72}$ | $p_{15}, p_{34}$ | $p_{15}, p_{34}, p_{53}, p_{72}$ | $(t_5 + t_6 <\!<1 + t_7 + 2) >\!> 2$ |
| $p_{63}$ | $p_{06}, p_{25}$ | $p_{05}, p_{35}, p_{54}, p_{63}$ | $(t_5 + t_7 + 1) >\!> 1$ |
| $P_{73}$ | $p_{16}, p_{35}$ | $p_{16}, p_{25}, p_{44}, p_{73}$ | $(t_6 + t_7 <\!<1 + t_8 + 2) >\!> 2$ |
| - | $p_{07}, p_{26}$ | $p_{07}, p_{26}, p_{45}, p_{64}$ | $(t_7 + t_8 + 1) >\!> 1$ |
| - | $p_{17}, p_{36}$ | $p_{17}, p_{36}, p_{55}, p_{74}$ | $(t_7 + t_8 <\!<1 + t_9 +2) >\!> 2$ |
| - | $p_{27}$ | $p_{27}, p_{46}, p_{55}$ | $(t_8 + t_9 + 1) >\!> 1$ |
| - | $p_{37}$ | $p_{31}, p_{56}, p_{75}$ | $(t_8 + t_9 <\!<1 + t_{10} + 2) >\!> 2$ |
| - | - | $p_{47}, p_{66}$ | $(t_9 + t_{10} + 1) >\!> 1$ |
| - | - | $P_{57}, p_{76}$ | $(t_9 + t_{10} <\!<1 + t_{11} + 2) >\!> 2$ |
| - | - | $p_{67}$ | $(t_{10} + t_{11} + 1) >\!> 1$ |
| - | - | $p_{77}$ | $(t_0 + t_{11} <\!<1 + t_{12} + 2) >\!> 2$ |

und wobei unter dem genannten Modus 7 Pixelwerte gemäß einem Subblock ausgewählt aus den folgenden Subblöcken vorhergesagt werden:

| 4×8 Subblock | 8×4 Subblock | 8×8 Subblock | Vorhergesagt durch |
|---|---|---|---|
| $p_{00}$ | $p_{00}$ | $p_{00}$ | $(l_0 + l_1 + 1) >\!> 1$ |
| $p_{01}$ | $p_{01}$ | $p_{01}$ | $(l_0 + l_1 <\!<1+l_2+2) >\!> 2$ |
| $p_{10}, p_{02}$ | $p_{10}\ p_{02}$ | $p_{10}\ p_{02}$ | $(l_1 + l_2 +1) >\!> 1$ |
| $p_{11}, p_{03}$ | $p_{11}, p_{03}$ | $p_{11}, p_{03}$ | $(l_1 + l_2 <\!<1+l_3 + 2) >\!> 2$ |
| $p_{20}\ p_{12}$ | $p_{20}, p_{12}, p_{04}$ | $p_{20}, p_{12}, p_{04}$ | $(l_2 + l_3 +1) >\!> 1$ |
| $p_{21}, p_{13}$ | $p_{21}\ p_{13}, p_{05}$ | $p_{21}, p_{13}, p_{05}$ | $(l_2 + l_3 <\!<1 + l_4 + 2) >\!> 2$ |
| $p_{30}, p_{22}$ | $p_{30}, p_{22}, p_{14}, p_{06}$ | $p_{30}, p_{22}, p_{14}, p_{06}$ | $(l_3 + l_4 +1) >\!> 1$ |
| $p_{31}, p_{23}$ | $p_{31}, p_{23}, p_{15}, p_{07}$ | $p_{31}, p_{23}, p_{15}, p_{07}$ | $(l_3 + l <\!<1+l_5 + 2) >\!> 2$ |
| $p_{40}, p_{32}$ | $p_{32}, p_{24}, p_{16}$ | $p_{40}, p_{32}, p_{24}, p_{16}$ | $(l_4 + l_5 +1) >\!> 1$ |
| $p_{41}, p_{33}$ | $p_{33}, p_{25}, p_{17}$ | $p_{41}, p_{33}, p_{25}, p_{17}$ | $(l_4 + l_5 <\!< 1 + l_6 + 2) >\!> 2$ |
| $p_{50}, p_{42}$ | $p_{34}, p_{26}$ | $p_{50}, p_{42}, p_{34}, p_{26}$ | $(l_5 + l_6 + 1) >\!>1$ |
| $p_{51}, p_{43}$ | $p_{35}, p_{27}$ | $p_{51}, p_{43}, p_{35}, p_{27}$ | $(l_5 + l_6 <\!< 1 + l_7 + 2) >\!> 2$ |
| $p_{60}, p_{52}$ | $p_{36}$ | $p_{60}, p_{52}, p_{44}, p_{35}$ | $(l_6 + l_7 +) >\!>1$ |
| $p_{61}, p_{53}$ | $p_{37}$ | $p_{61}, p_{53}, p_{45}, p_{37}$ | $(l_6 + l_7 <\!< +l_7 + 2) >\!> 2$ |
| $p_{70}, p_{62}, p_{71}, p_{63}, P_{63}, p_{72}, p_{73}$ | - | $p_{70}, p_{71}, p_{72}, p_{73}, p_{74}, p_{75}, p_{76}, p_{77}, p_{62}, p_{63}, p_{64}, p_{65}, p_{66}, p_{67}, p_{54}, p_{55}, p_{55}, p_{57}, p_{46}, p_{47}$ | $l_7$ |

**Revendications**

1. Un appareil comprenant :

un codeur adapté de façon à exécuter une opération sélectionnée parmi un intracodage d'un macrobloc de données vidéo et un décodage d'un macrobloc intracodé de données vidéo, où un macrobloc intracodé comprend un premier sous-bloc M×N de valeurs de pixel prédites selon un premier mode de prédiction comme suit :

où $t_0$ - $t_{N-1}$ et $l_0$ - $l_{M-1}$ sont disponibles,
$P_{ij} = (t_0 + ... + t_{N-1} + l_0 + ... + l_{M-1} + N/2 + M/2) / (M + N)$,
Sinon si seulement $t_0$ - $t_{N-1}$ sont disponibles,
$P_{ij} = (t_0 + ... + t_{N-1} + N/2) / N$,
Sinon si seulement $l_0$ - $l_{M-1}$ sont disponibles,
$P_{ij} = (l_0 + ... + l_{M-1} + M/2) / M$,
Sinon
$P_{ij} = 128$,
pour i = 0 - (N - 1), j = 0 - (M - 1),

où le premier sous-bloc M×N est un sous-bloc sélectionné parmi un sous-bloc 4×8, un sous-bloc 8×4 et un sous-bloc 8×8,
$P_{ij}$ sont des valeurs de pixel du sous-bloc M×N, avec i et j étant des indices indiquant des positions de lignes et de colonnes à l'intérieur du sous-bloc M×N,
où $t_0$ - $t_{N-1}$ sont disponibles, $t_0$ - $t_{N-1}$ sont des valeurs de pixel d'un sous-bloc adjacent au-dessus du sous-bloc M×N,
où $t_N$ - $t_{2N-1}$ sont disponibles, $t_N$ - $t_{2N-1}$ sont des valeurs de pixel d'un sous-bloc adjacent au-dessus et à la droite du sous-bloc M×N,
où $l_0$ - $l_{M-1}$ sont disponibles, $l_0$ - $l_{M-1}$ sont des valeurs de pixel d'un sous-bloc adjacent à la gauche du sous-bloc M×N,
où le macrobloc intracodé comprend un deuxième sous-bloc M×N de valeurs de pixel prédites dans un mode de prédiction diagonale sélectionné parmi le mode 4, le mode 6 et le mode 7,
où le deuxième sous-bloc M×N et tous les sous-blocs adjacents disponibles sont de la même taille que le premier sous-bloc M×N,
où dans ledit mode 4, des valeurs de pixel sont prédites selon un sous-bloc sélectionné parmi :

| sous-bloc 4×8 | sous-bloc 8×4 | sous-bloc 8×8 | prédit par |
|---|---|---|---|
| $p_{00}$ | $p_{00}$ | $p_{00}$ | $(t_2 + t_1 <<1 + t_0) >> 2$ |
| $p_{01}$, $p_{10}$ | $p_{01}$, $p_{10}$ | $p_{01}$, $p_{10}$ | $(t_3 + t_2 <<1 + t, 2) >> 2$ |
| $p_{00}$, $p_{11}$, $p_{20}$ | $p_{02}$, $p_{11}$, $p_{20}$ | $p_{02}$, $p_{01}$ $p_{20}$ | $(t_4 + t_3 <<1 \ t_2 + 2) >> 2$ |
| $p_{00}$, $p_{12}$, $p_{21}$, $p_{30}$ | $p_{03}$, $p_{12}$ $p_{21}$, $p_{30}$ | $p_{03}$, $p_{02}$, $p_{21}$, $p_{30}$ | $(t_5 + t_1 <<1 + t_3 + 2) >> 2$ |
| $p_{13}$, $p_{22}$, $p_{31}$, $p_{40}$ | $p_{04}$, $p_{13}$, $p_{22}$, $p_{31}$ | $p_{04}$, $p_{13}$, $p_{22}$, $p_{31}$, $p_{40}$ | $(t_6 + t_4 + 2) >> 2$ |
| $p_{23}$, $p_{32}$ $p_{41}$, $p_{50}$ | $p_{05}$, $p_{14}$, $p_{23}$, $p_{32}$ | $p_{05}$, $p_{23}$, $p_{32}$, $p_{41}$ $p_{50}$ | $(t_7 + t_6 <<1 + t_5 + 2) >> 2$ |
| $p_{33}$, $p_{42}$, $p_{51}$, $p_{50}$ | $p_{06}$, $p_{33}$ | $p_{05}$, $p_{15}$, $p_{24}$, $p_{33}$, $p_{42}$, $p_{51}$, $p_{60}$ | $(t_6 + t_7 <<1 + t_6 + 2) >> 2$ |
| $p_{43}$, $p_{52}$, $p_{51}$, $p_{70}$ | $p_{07}$, $p_{16}$, $p_{25}$, $p_{34}$ | $p_{07}$, $p_{16}$, $p_{23}$, $p_{34}$, $p_{43}$, $p_{52}$, $p_{61}$, $p_{70}$ | $(t_9 + t_8 <<1 + t_7 + 2) >> 2$ |
| $p_{53}$, $p_{62}$, $p_{71}$ | $p_{18}$, $p_{26}$, $p_{35}$ | $p_{17}$, $p_{26}$, $p_{35}$, $p_{44}$ $p_{53}$ $p_{62}$ $p_{71}$ | $(t_{10} + t_9 <<1 + 2) >> 2$ |
| $p_{63}$, $p_{72}$ | $p_{27}$, $p_{35}$ | $p_{27}$, $p_{36}$, $p_{45}$, $p_{54}$, $p_{63}$, $p_{72}$ | $(t_{11} + t_{10} << 2$ |
| $p_{13}$ | $p_{37}$ | $p_{37}$, $p_{46}$ $p_{35}$, $p_{64}$, $p_{73}$ | $(t_{12} + t_{11} \ 2) >> 2$ |
| - | - | $p_{47}$, $p_{36}$, $p_{64}$, $p_{74}$ | $(t_{13} + t_{12} <<1 + t_{11} + 2) >> 2$ |
| - | - | $p_{57}$, $p_{66}$, $p_{75}$ | $(t_{14} + t_{13} <<1 + t_{12} + 2) >> 2$ |
| - | - | $p_{67}$, $p_{76}$ | $(t_{15} + t_{14} <<1 + t_{13} \ 2) >> 2$ |
| - | - | $p_{77}$ | $(t_{15} + t_{15} << t_{14} \ 2) >> 2$ |

où dans ledit mode 6, des valeurs de pixel sont prédites selon un sous-bloc sélectionné parmi :

| sous-bloc 4×8 | sous-bloc 8×4 | sous-bloc 8×8 | prédit par |
|---|---|---|---|
| $p_{00}$ | $p_{00}$ | $p_{00}$ | $(t_0 + t_1 + 1) >> 1$ |
| $p_{00}$ | $p_{10}$ | $p_{10}$ | $(t_0 + t_1<<1 + t_2 + 2) >> 2$ |
| $p_{01}, p_{20}$ | $p_{01}, p_{20}$ | $p_{01}, p_{20}$ | $(t_1 + t_2 + 1) >> 1$ |
| $p_{11}, p_{30}$ | $p_{11}, p_{30}$ | $p_{11}, p_{30}$ | $(t_1 + t_2<<1 + t_3 + 2) >>2$ |
| $p_{02}, p_{21}, p_{40}$ | $p_{02}, p_{21}$ | $p_{02}, p_{21}, p_{40}$ | $(t_2 + t_3 + 1) >> 1$ |
| $p_{12}, p_{31}, p_{50}$ | $p_{12}, p_{31}$ | $p_{12}, p_{31}, p_{50}$ | $(t_2 + t_3<<1 +t_4 + 2) >> 2$ |
| $p_{03}, p_{22}, p_{41}, p_{60}$ Pm | $p_{03}, p_{22}$ | $p_{03}, p_{22}, p_{41}, p_{60}$ | $(t_3 + t_4 + 1) >> 1$ |
| $p_{13}, p_{32}, p_{51}$ $p_{70}$ | $p_{13}, p_{32}$ | $p_{13}, p_{32}, p_{51}, p_{70}$ | $(t_3 + t_4<<1 + t_5 + 2) >>2$ |
| $p_{23}, p_{42}, p_{61}$ | $p_{04}, p_{23}$ | $p_{04}, p_{23}, p_{42}, p_{61}$ | $(t_4 + t_5 + 1) >> 1$ |
| $p_{33}, p_{71}$ | $p_{14}, p_{33}$ | $p_{14}, p_{33}, p_{52}, p_{71}$ | $(t_4 + t_5 <<1 + t_6 + >> 2$ |
| $p_{43}$ $p_{362}$ | $p_{05}$ $p_{24}$ | $p_{05}, p_{43}, p_{62}$ | $(t_5 + t_6 +) >> 1$ |
| $p_{53}, p_{72}$ | $p_{15}, p_{34}$ | $p_{15}, p_{34}, p_{53}, p_{72}$ | $(t_5 + t_6 <<1 + t_7 + 2) >> 2$ |
| $p_{63}$ | $p_{06}$ $p_{25}$ | $p_{06}, p_{35}, p_{54}, p_{53}$ | $(t_6 +t_7 + 1) >>1$ |
| $p_{73}$ | $p_{16}$ $p_{35}$ | $p_{16}, p_{25}, p_{44}, p_{73}$ | $(t_6 + t_7 <<1 + t_8 + 2) » 2$ |
| - | $p_{07}$ $p_{26}$ | $p_{07}, p_{26}, p_{64}$ | $(t_7 + t_8 + 1) >>1$ |
| - | $p_{17}, p_{36}$ | $p_{17}, p_{36}, p_{55}, p_{74}$ | $(t_7 + t_8<<1 + t_9 + 2) >>2$ |
| - | $p_{27}$ | $p_{27}, p_{46}, p_{65}$ | $(t_8 + t_9 + 1) >> 1$ |
| - | $p_{37}$ | $p_{37}, p_{56}, p_{75}$ | $(t_8 + t_9<<1 t_{10} + 2) >> 2$ |
| - | - | $p_{47}, p_{66}$ | $(t_9 + t_{10} + 1) >> 1$ |
| - | - | $p_{57}, p_{75}$ | $(t_9 + t_{10}<< 1 t_{11} + 2) >> 2$ |
| - | - | $p_{67}$ | $(t_{10} + t_{11} + 1) >>1$ |
| ' - | - | $p_{77}$ | $(t_0 + t_{11} << 1 + 2) >> 2$ |

et où dans ledit mode 7, des valeurs de pixel sont prédites selon un sous-bloc sélectionné parmi :

| sous-bloc 4×8 | sous-bloc 8×4 | sous-bloc 8×8 | prédit par |
|---|---|---|---|
| $p_{00}$ | $p_{00}$ | $p_{00}$ | $(l_0 + l_1 +1) >> 1$ |
| $p_{01}$ | $p_{01}$ | $p_{01}$ | $(l_0 + l_1<<1 + l_2 + 2) >>2$ |
| $p_{10}, p_{02}$ | $p_{10}, p_{02}$ | $p_{10}, p_{02}$ | $(l_1 + l_2 +1) >>1$ |
| $p_{11}, p_{03}$ | $p_{11}, p_{03}$ | $p_{11}, p_{03}$ | $(l_1 + l_2<<1 + l_3 + 2) >> 2$ |
| $p_{20}, p_{12}$ | $p_{20}, p_{12}, p_{04}$ | $p_{20}, p_{12}, p_{04}$ | $(l_2 + l_3 + 1) >> 1$ |
| $p_{21}, p_{13}$ | $p_{21}, p_{13}, p_{05}$ | $p_{21}, p_{13}, p_{05}$ | $(l_2 + l_3<<1+l_4 + 2) >> 2$ |
| $p_{30}, p_{22}$ | $p_{30}, p_{22}, p_{14}, p_{06}$ | $p_{30}, p_{22}, p_{14}, p_{06}$ | $(l_3 + l_4 +1) >> 1$ |
| $p_{31}, p_{23}$ | $p_{31}, p_{23}, p_{15}, p_{07}$ | $p_{31}, p_{23}, p_{15}, p_{07}$ | $(l_3 + l_4<< 1 +l_5) >>2$ |
| $p_{40}, p_{32}$ | $p_{32}$ $p_{24}, p_{16}$ | $p_{40}, p_{32}, p_{24}, p_{16}$ | $l_4 + l_5 +1)>> 1$ |
| $p_{41}, p_{33}$ | $p_{33}, p_{25}, p_{17}$ | $p_{41}, p_{33}, p_{33}, p_{17}$ | $(l_4 + l_5<< 1+ l_6 +2) >>2$ |
| $p_{50}$ $p_{42}$ | $p_{34}, p_{26}$ | $p_{50}, p_{42}, p_{34}, p_{26}$ | $(l_5 + l_6 + 1) >> 1$ |

(suite)

| sous-bloc 4×8 | sous-bloc 8×4 | sous-bloc 8×8 | prédit par |
|---|---|---|---|
| $p_{51}$, $p_{43}$ | $p_{35}$, $p_{27}$ | $p_{51}$, $p_{43}$, $p_{35}$, $p_{27}$ | $(l_5 + l_6 << 1 + l_7 + 2) >> 2$ |
| $p_{60}$, $p_{52}$ | $p_{36}$ | $p_{60}$, $p_{52}$, $p_{44}$, $p_{36}$ | $(l_6 + l_7 + 1) >>$ |
| $p_{61}$, $p_{53}$ | $p_{37}$ | $p_{61}$, $p_{53}$, $p_{45}$, $p_{37}$ | $(l_6 + l_7 << 1 + l_7) >> 2$ |
| $p_{70}$, $p_{62}$, $p_{63}$, $p_{63}$, $p_{72}$, $p_{73}$ | - | $p_{70}$, $p_{71}$, $p_{72}$, $p_{73}$, $p_{74}$, $p_{75}$, $p_{76}$, $p_{77}$, $p_{62}$, $p_{63}$, $p_{64}$, $p_{65}$, $p_{66}$, $p_{67}$, $p_{54}$, $p_{55}$, $p_{56}$, $p_{57}$, $p_{46}$, $p_{47}$ | $l_7$ |

FIGURE 1

Figure 2

| Q | A | B | C | D | E | F | G | H | | |
|---|---|---|---|---|---|---|---|---|---|---|
| I | a | b | c | d | | | | | | |
| J | e | f | g | h | | | | | | |
| K | i | j | k | l | | | | | | |
| L | m | n | o | p | | | | | | |
| M | | | | | | | | | | |
| N | | | | | | | | | | |
| O | | | | | | | | | | |
| P | | | | | | | | | | |
| | . . . | | | | . . . | | | . . . | | |

Figure 3

Figure 4

Figure 5

Figure 6

Article with Recordable
Medium 700

Encoder 100 and/or
Decoder 400

Video Device 710

Storage Medium 712

Encoder 100 and/or
Decoder 400

Processor
714

**Figure 7**

EP 1 750 452 B1

Video Sender 802

Encoder 100

Video Receiver 804

Decoder 400

800

**Figure 8**

| q | $t_0$ | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |
|---|---|---|---|---|---|---|---|---|---|---|---|---|---|---|---|---|
| $l_0$ | $p_{00}$ | $p_{01}$ | $p_{02}$ | $p_{03}$ | $p_{04}$ | $p_{05}$ | $p_{06}$ | $p_{07}$ | | | | | | | | |
| $l_1$ | $p_{10}$ | $p_{11}$ | $p_{12}$ | $p_{13}$ | $p_{14}$ | $p_{15}$ | $p_{16}$ | $p_{17}$ | | | | | | | | |
| $l_2$ | $p_{20}$ | $p_{21}$ | $p_{22}$ | $p_{23}$ | $p_{24}$ | $p_{25}$ | $p_{26}$ | $p_{27}$ | | | | | | | | |
| $l_3$ | $p_{30}$ | $p_{31}$ | $p_{32}$ | $p_{33}$ | $p_{34}$ | $p_{35}$ | $p_{36}$ | $p_{37}$ | | | | | | | | |
| $l_4$ | $p_{40}$ | $p_{41}$ | $p_{42}$ | $p_{43}$ | $p_{44}$ | $p_{45}$ | $p_{46}$ | $p_{47}$ | | | | | | | | |
| $l_5$ | $p_{50}$ | $p_{51}$ | $p_{52}$ | $p_{53}$ | $p_{54}$ | $p_{55}$ | $p_{56}$ | $p_{57}$ | | | | | | | | |
| $l_6$ | $p_{60}$ | $p_{61}$ | $p_{62}$ | $p_{63}$ | $p_{64}$ | $p_{65}$ | $p_{66}$ | $p_{67}$ | | | | | | | | |
| $l_7$ | $p_{70}$ | $p_{71}$ | $p_{72}$ | $p_{73}$ | $p_{74}$ | $p_{75}$ | $p_{76}$ | $p_{77}$ | | | | | | | | |

**Figure 9a**

| q | $t_0$ | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |
|---|---|---|---|---|---|---|---|---|---|---|---|---|---|---|---|---|
| $l_0$ | $p_{00}$ | $p_{01}$ | $p_{02}$ | $p_{03}$ | $p_{04}$ | $p_{05}$ | $p_{06}$ | $p_{07}$ | | | | | | | | |
| $l_1$ | $p_{10}$ | $p_{11}$ | $p_{12}$ | $p_{13}$ | $p_{14}$ | $p_{15}$ | $p_{16}$ | $p_{17}$ | | | | | | | | |
| $l_2$ | $p_{20}$ | $p_{21}$ | $p_{22}$ | $p_{23}$ | $p_{24}$ | $p_{25}$ | $p_{26}$ | $p_{27}$ | | | | | | | | |
| $l_3$ | $p_{30}$ | $p_{31}$ | $p_{32}$ | $p_{33}$ | $p_{34}$ | $p_{35}$ | $p_{36}$ | $p_{37}$ | | | | | | | | |

**Figure 9b**

| q | $t_0$ | $t_1$ | $t_2$ | $t_3$ | $t_4$ | $t_5$ | $t_6$ | $t_7$ |
|---|---|---|---|---|---|---|---|---|
| $l_0$ | $p_{00}$ | $p_{01}$ | $p_{02}$ | $p_{03}$ | | | | |
| $l_1$ | $p_{10}$ | $p_{11}$ | $p_{12}$ | $p_{13}$ | | | | |
| $l_2$ | $p_{20}$ | $p_{21}$ | $p_{22}$ | $p_{23}$ | | | | |
| $l_3$ | $p_{30}$ | $p_{31}$ | $p_{32}$ | $p_{33}$ | | | | |
| $l_4$ | $p_{40}$ | $p_{41}$ | $p_{42}$ | $p_{43}$ | | | | |
| $l_5$ | $p_{50}$ | $p_{51}$ | $p_{52}$ | $p_{53}$ | | | | |
| $l_6$ | $p_{60}$ | $p_{61}$ | $p_{62}$ | $p_{63}$ | | | | |
| $l_7$ | $p_{70}$ | $p_{71}$ | $p_{72}$ | $p_{73}$ | | | | |

**Figure 9c**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 73252200 A